(19) Europäisches Patentamt
European Patent Office
Office européen des brevets

(11) **EP 1 146 023 A1**

(12) **EUROPEAN PATENT APPLICATION**
published in accordance with Art. 158(3) EPC

(43) Date of publication:
17.10.2001 Bulletin 2001/42

(51) Int Cl.[7]: **C04B 26/06**, C04B 111/54

(21) Application number: 99959935.0

(86) International application number:
PCT/JP99/07168

(22) Date of filing: 21.12.1999

(87) International publication number:
WO 00/39048 (06.07.2000 Gazette 2000/27)

(84) Designated Contracting States:
AT BE CH CY DE DK ES FI FR GB GR IE IT LI LU MC NL PT SE
Designated Extension States:
AL LT LV MK RO SI

(30) Priority: 25.12.1998 JP 37050898

(71) Applicant: Mitsubishi Rayon Co., Ltd.
Tokyo 108-8506 (JP)

(72) Inventors:
• SAIKI, Shinji Pro. Dev. Lab. Mit. Rayon Co., Ltd.
Nagoya-shi Aichi 461-8511 (JP)
• KOYANAGI, Seiya P. Dev. Lab.
Mit. Rayon Co., Ltd.
Nagoya-shi Aichi 461-8511 (JP)
• MATSUYAMA, Y. P. Dev. Lab.
Mit. Rayon Co., Ltd.
Nagoya-shi Aichi 461-8511 (JP)
• KISHIMOTO, Y. P. Dev. Lab. Mit. Rayon Co., Ltd.
Nagoya-shi Aichi 461-8511 (JP)

(74) Representative: Merkle, Gebhard et al
TER MEER STEINMEISTER & PARTNER GbR,
Patentanwälte,
Mauerkircherstrasse 45
81679 München (DE)

(54) **ACRYLIC SMC OR BMC, PROCESS FOR PRODUCING THE SAME, PROCESS FOR PRODUCING ARTIFICIAL ACRYLIC MARBLE, AND THICKENER**

(57) There are disclosed an acrylic SMC or BMC comprising an acrylic monomer or acrylic syrup (A), an inorganic filler (B) and a polymer powder (C) containing a remaining emulsifier in an amount from 0.01 to 0.95 wt% as constituent components; a method for producing an acrylic SMC or BMC comprising kneading the components at a temperature from 20 to 70°C for thickening thereof using a kneader 8; a method for producing artificial marble comprising curing under heat and pressure this acrylic SMC or BMC; and a thickening agent composed of the polymer powder (C). These are useful for producing (meth)acrylic artificial marble having excellent various properties such as appearance, hot water-resistance and the like.

F I G. 1

**Description**

**TECHNICAL FIELD**

The present invention relates to an acrylic SMC (sheet molding compound) or BMC (bulk molding compound) showing high productivity and having excellent handling property and molding processability and a method for producing the same, a method for producing acrylic artificial marble showing high productivity and having excellent appearance, hot water-resistance and heat-resistance, and a thickening agent imparting excellent appearance, hot water-resistance and heat resistance to an artificial marble molded article and showing excellent productivity.

**BACKGROUND ART**

Acrylic artificial marble prepared by compounding inorganic fillers such as aluminum hydroxide and the like into an acrylic resin has various prominent functions and properties such as excellent appearance, warm feeling, weatherability and the like of a molded article and is widely used for counters such as a kitchen counter and the like, washing and dressing stands, waterproof pan, and other architectural uses. These are usually produced by a casting method in which a so-called premix prepared by dispersing inorganic fillers into an acrylic syrup composed of acrylic monomers containing methyl methacrylate and of an acrylic polymer is filled into a mold, and this is cured and polymerized at relatively lower temperature. However, since this acrylic syrup has a lower boiling point, the curing temperature has to be lowered, which requires longer molding time leading to lower productivity. Further, the form of a molded article is restricted since the filling property of a premix into a mold is problematical.

For improving these defects, there has been conventionally effected investigation for producing acrylic artificial marble by curing under heat and pressure an acrylic BMC obtained by thickening an acrylic premix with a thickening agent.

For example, Japanese Patent Application Laid-Open (JP-A) No. 5-32720 discloses an acrylic BMC for artificial marble having excellent handling property and molding property, obtained by compounding an inorganic filler and a cross-linked resin powder having specific degree of swelling obtained by suspension polymerization into an acrylic syrup prepared by previously dissolving an acrylic polymer in an acrylic monomer.

For example, JP-A No. 6-298883 discloses an acrylic BMC for artificial marble excellent in low shrinkage property in heat-curing, obtained by compounding into an acrylic syrup prepared by previously dissolving an acrylic polymer in an acrylic monomer an inorganic filler and a thermoplastic acrylic resin powder having poor solubility in the syrup.

Further, JP-A No. 6-313019 discloses an acrylic BMC for artificial marble which prevents cracking in molding and provides a molded article having improved appearance and thickening stability, obtained by compounding a resin powder prepared

by spray-drying treatment of a cross-linked polymer obtained by emulsion polymerization into an acrylic syrup prepared by previously dissolving an acrylic polymer in an acrylic monomer.

Further more, Japanese Patent Application Publication (JP-B) No. 5-13899 discloses an acrylic BMC for artificial marble having excellent heat-resistance, obtained by compounding an inorganic filler and an acrylic resin powder having specific average molecular weight into an acrylic monomer containing a cross-linking agent in specific amount.

However, when the resin powders disclosed in JP-A Nos. 5-32720, 6-298883 and 6-313019 are used as a thickening agent, aging of a premix for obtaining an acrylic BMC tends to need a long period of time (24 hours), causing reduction in productivity.

On the other hand in the method disclosed in JP-B No. 5-13899, since kneading is conducted at a temperature of 60°C for 30 minutes or more for dissolving the polymer powder and thickening the mixture, an acrylic BMC receives heat history of a long period of time and the storage stability of the resulted acrylic BMC deteriorates. Further, when a grain-like acrylic BMC is intended to be obtained by compounding a colored resin particle, the colored resin particle is dissolved in kneading and the grain pattern becomes extremely unclear or the grain pattern disappears, causing poor appearance.

For solving these problems, the present inventors have found that when a polymer powder having specific bulk density, specific oil absorption and specific degree of swelling obtained by spray-drying an emulsion-polymerized emulsion is used as a thickening agent, an acrylic SMC or BMC is obtained which has high thickening speed, requires no aging and provides a clear grain pattern (JP-A No. 10-67906).

Also, it has been found to impart various functions by introducing a core/shell structure into a polymer powder.

For example, JP-A No. 9-110497 discloses an acrylic BMC for artificial marble having low shrinkage and excellent dimension stability suitable for molding at higher temperature by controlling the glass transition temperature of a core layer of a polymer powder to 70°C or less.

Further, JP-A No. 9-111084 discloses an acrylic BMC for artificial marble having high productivity and high strength by inclusion of a polyfunctional monomer in an amount of 0.01 to 1 wt% as a constituent component of a shell layer of a polymer powder.

However, the polymer powders described in JP-A Nos. 10-67906, 9-110497 and 9-11084 contain a remaining emulsifier used for emulsion polymerization since the powders have been produced by spray-drying, and use thereof in uses requiring high hot water-resistance is difficult. Particularly, current molded articles such as artificial marble and the like further need excellent hot water-resistance.

## DISCLOSURE OF INVENTION

The present invention has been accomplished for further improving the hot water-resistance of the resulted molded article by investigation of a polymer powder used as a thickening agent in an acrylic SMC or BMC for artificial marble.

Namely, the object of the present invention is to provide an acrylic SMC or BMC having high productivity, excellent handling property, molding processability and storage stability useful for production of molded articles such as acrylic artificial marble and the like having excellent appearance and hot water-resistance and a method for producing the same; a method for producing acrylic artificial marble having high productivity and excellent appearance and hot water-resistance; and a polymer powder imparting excellent appearance and hot water-resistance to an artificial marble molded article and revealing excellent productivity.

The present inventors have been intensively studied to attain the above-described object, and resultantly found that acrylic artificial marble having excellent hot water-resistance can be produced by using as a thickening agent a polymer powder containing a remaining emulsifier in an amount from 0.01 to 0.95 wt%, and that when kneading is conducted at a kneading temperature from 20 to 70°C using this thickening agent, the thickening is completed in 20 minutes or less and an acrylic SMC or BMC having excellent storage stability and a clear grain pattern can be produced with high productivity, completed the present invention.

Namely, the present invention relates to;

An acrylic SMC or BMC comprising an acrylic monomer or acrylic syrup (A), an inorganic filler (B) and a polymer powder (C) containing a remaining emulsifier in an amount from 0.01 to 0.95 wt%, and if desired, an inorganic filler-containing resin particle (D), as constituent components;

A method for producing an acrylic SMC or BMC comprising the step of kneading an acrylic monomer or acrylic syrup (A), an inorganic filler (B) and a polymer powder (C) containing a remaining emulsifier in an amount from 0.01 to 0.95 wt%, and if desired, an inorganic filler-containing resin particle (D) at a kneading temperature from 20 to 70°C for thickening thereof in a kneading time of 20 minutes or less;

A method for producing an acrylic SMC or BMC in which an acrylic monomer or acrylic syrup (A), an inorganic filler (B) and a polymer powder (C) containing a remaining emulsifier in an amount from 0.01 to 0.95 wt%, and if desired, an inorganic filler-containing resin particle (D) are kneaded, thickened and extruded at a kneading temperature from 20 to 70°C in a time of 20 minutes or less in one step to shape the mixture into a desired form continuously;

A method for producing acrylic artificial marble comprising curing under heat and pressure the above-described acrylic SMC or BMC; and

A thickening agent composed of a polymer powder containing a remaining emulsifier in an amount from 0.01 to 0.95 wt%.

## BRIEF DESCRIPTION OF DRAWINGS

Fig. 1 is a view schematically showing a continuous twin screw kneader used in the present invention.
Fig. 2 is a view schematically showing one example of an acrylic BMC shaped into a sheet.

## BEST MODE FOR CARRYING OUT THE INVENTION

The acrylic monomer or acrylic syrup (A) used in the present invention is a component imparting suitable flowability in producing the acrylic SMC or BMC of the present invention.

The content of the component (A) is not particularly restricted and preferably from 5 to 95 wt% based on the total amount of the acrylic SMC or BMC of the present invention. When this content is 5 wt% or more, the flowability of the acrylic SMC or BMC tends to become excellent, and when 95 wt% or less, shrinkage ratio in curing tends to decrease. The lower limit of this content is more preferably 10 wt% or more, particularly preferably 15 wt% or more.

The upper limit of this content is more preferably 50 wt% or less, particularly preferably 40 wt% or less.

The acrylic monomer used in the component (A) is a monomer having a methacryloyl and/or acryloyl group or a mixture thereof, and is not particularly restricted. Included as examples thereof are acrylic monofunctional monomers such as methyl (meth)acrylate, alkyl (meth)acrylates carring an alkyl group having 2 to 20 carbon atoms, hydroxyalkyl (meth)acrylates carrying a hydroxyalkyl group having 1 to 20 carbon atoms, (meth)acrylates carrying an ester group having an aromatic ring such as benzyl (meth)acrylate and the like, (meth)acrylates carrying an ester group having a cyclohexane ring such as cyclohexyl (meth)acrylate and the like, (meth)acrylates carrying an ester group having a bicyclo ring such as isobornyl (meth)acrylate and the like, (meth)acrylates carrying an ester group having a tricyclo ring such as tricyclo[$5 \cdot 2 \cdot 1 \cdot 0^{2,6}$]decanyl (meth)acrylate and the like, (meth)acrylates carrying an ester group having a fluorine atom such as 2,2,2-trifluoroethyl (meth)acrylate and the like, (meth)acrylates carrying an ester group having a cyclic ether structure such as glycidyl methacrylate, tetrahydrofurfuryl (meth)acrylate and the like, (meth)acrylic acid, (meth)acrylic acid metal salts, (meth)acrylamide, and the like; and acrylic polyfunctional monomers such as ethylene glycol di(meth)acrylate, polyethylene glycol di(meth)acrylate, propylene glycol di(meth)acrylate, polypropylene glycol di(meth)acrylate, 1,3-butylene glycol di(meth)acrylate, 1,4-butylene glycol di(meth)acrylate, polybutylene glycol di (meth)acrylate, neopentyl glycol di(meth)acrylate, 1,6-hexanediol di(meth)acrylate, 1,9-nonanediol di(meth)acrylate, 1,10-decanediol di(meth)acrylate, dimethylolethane di(meth)acrylate, 1,1-dimethylolpropane di(meth)acrylate, trimethylolethane tri(meth)acrylate, trimethylolpropane tri(meth)acrylate, tetramethylolmethane tri(meth)acrylate, tetramethylolmethane di(meth)acrylate, and poly-valent esters of (meth)acrylic acid with poly-valent alcohol [e.g., pentaerythritol, dipentaerythritol and the like], allyl (meth)acrylate, and the like. In this specification, "(meth)acrylate" means "acrylate and or methacrylate".

These may be used alone or in combination of two or more according to demands.

Particularly when methyl methacrylate is contained in the component (A), there are tendencies that the resulted molded article can be endowed with deep feeling specific to marble, and appearance becomes excellent, meaning preferable results. The content of methyl methacrylate is not particularly restricted and preferably from 1 to 40 wt% based on the total amount of an acrylic SMC or BMC. The lower limit of this content is more preferably 5 wt% or more, and the upper limit is more preferably 30 wt% or less.

The component (A) may contain aromatic vinyls such as styrene, divinylbenzene and the like, or monomers such as vinyl acetate, (meth)acrylonitrile, vinyl chloride, maleic anhydride, maleic acid, maleate, fumaric acid, fumarate, triaryl isocyanurate and the. like, in addition to an acrylic monomer.

For imparting properties such as hot water-resistance, heat-resistance, mechanical strength, solvent-resistance, dimension stability and the like to a molded article obtained by using the acrylic SMC or BMC of the present invention, a polyfunctional monomer is preferably contained in the component (A).

In this case, the content of polyfunctional monomer is not particularly restricted, and preferably from 1 to 30 wt% based on the total amount of the acrylic SMC or BMC for obtaining a molded article having the above-described properties more effectively manifested. The lower limit of this content is more preferably 3 wt% or more, and the upper limit thereof is more preferably 25 wt% or less.

Particularly, use of at least one of neopentyl glycol di(meth)acrylate, 1,3-butylene glycol di(meth)acrylate and tripropylene glycol di(meth)acrylate as the polyfunctional monomer is preferable since then a molded article having extremely excellent surface gloss and heat-resistance is obtained.

In this case, at least one of neopentyl glycol di(meth)acrylate, 1,3-butylene glycol di(meth)acrylate and tripropylene glycol di(meth)acrylate and other polyfunctional monomer may also be used together.

Regarding the component (A) of the present invention, (1) the above-described acrylic monomer may also be used as it is, (2) the above-described acrylic monomer may also be partially polymerized to prepare a syrup to be used containing the produced polymer component in the acrylic monomer component, or (3) the above-described acrylic monomer may also be polymerized separately according to a known method such as solution polymerization, bulk polymerization, suspension polymerization, emulsion polymerization and the like to obtain an acrylic polymer which is then dissolved in the acrylic monomer to prepare a syrup to be used.

As the acrylic polymer to be dissolved in the above-described method (3), two or more acrylic polymers having different compositions and/or molecular weights may also be used together.

When an acrylic syrup is used as the component (A), the content of an acrylic polymer in the acrylic syrup is not particularly restricted, and preferably in the range from 1 to 40 wt% based on the total amount of the acrylic syrup. Then the content of an acrylic polymer is in the above-descried range, the viscosity providing easy handling tends to be obtained. The lower limit of an acrylic polymer is more preferably 3 wt% or more, particularly preferably 5 wt% or more. The upper limit thereof is more preferably 35 wt% or less, particularly preferably 30 wt% or less.

When an acrylic syrup is used as the component (A), the weight-average molecular weigh of an acrylic polymer in the acrylic syrup is not particularly restricted, and preferably in the range from 10,000 to 5,000,000. When the weight-average molecular weight is 10,000 or more, the strength of a molded article obtained by curing the acrylic SMC or BMC of the present invention tends to increase, on the other hand, when the weight-average molecular weight is 5,000,000 or less, there is a tendency that the viscosity of the acrylic syrup decreases providing excellent handling property. The lower limit of the weight-average molecular weight of an acrylic polymer in the acrylic syrup is more preferably 30,000 or more, and the upper limit thereof is more preferably 4,000,000 or less.

The weight-average molecular weight referred to in the present invention is a value in terms of polystyrene obtained by a GPC method and measured under the following conditions.

Apparatus: High performance GPC apparatus HLC-8020, manufactured by Tosoh Corp.
Column: three TSKgelGMHXL are connected in series, manufactured by Tosoh Corp.
Oven temperature: 38°C
Elution solution: Tetrahydrofuran
Sample concentration: 0.4 % by weight
Flow rate: 1 ml/minute
Flow amount: 0.1 ml
Detector: RI (differential refractometer)

The inorganic filler (B) used in the present invention is a component which imparts marble-like deep texture and heat-resistance to a molded article obtained by molding the acrylic SMC or BMC.

The content of the component (B) is not particularly restricted, and preferably from 5 to 95 wt% based on the total amount the acrylic SMC or BMC. When the content of the component (B) is 5% by weight or more, the resulting molded article tends to have excellent texture and heat-resistance, further, tends to have low shrinkage rate in curing. On the other hand, when the content is 95% by weight or less, flowability in molding the acrylic SMC or BMC tends to be excellent. The lower limit of this content is more preferably 20% by weight or more, particularly preferably 30% by weight or more. The upper limit thereof is more preferably 80% by weight or less, particularly preferably 70% by weight or less.

The inorganic filler (B) is not particularly restricted, and there can be used, for example, aluminum hydroxide, silica, amorphous silica, calcium carbonate, barium sulfate, titanium oxide, calcium phosphate, talc, mica, clay, glass powder and the like. These may be optionally selected appropriately for use, and two or more may also be used together. Among them, aluminum hydroxide, calcium carbonate, silica, amorphous silica, and glass powder are preferable in view of the texture of the resulting molded article.

The polymer powder (C) used in the present invention is a polymer powder containing a remaining emulsifier in an amount from 0.01 to 0.95 wt%, and is a thickening agent to thicken the acrylic SMC or BMC of the present invention to condition of no stickiness. When this remaining emulsifier amount is from 0.01 to 0.95 wt%, the hot water-resistance of a molded article increases. The upper limit of this remaining emulsifier amount is preferably 0.7 wt% or less, more preferably 0.5 wt% or less, particularly preferably 0.3 wt% or less. The lower limit thereof is preferably 0.1 wt% or more.

The remaining emulsifier in the present invention is a component composed of surfactants such as an emulsifier, dispersing agent and the like used in polymerization, remaining in a polymer powder, and is a component extracted from a polymer powder according to the following method. The weighed about 1 g of a polymer powder is extracted at 105°C for 3 hours three times using methanol in a pressure bottle, a dry residue in the extracted solution is extracted twice with hot water, filtrated through a 0.5 μm filter, the filtrate is concentrated before drying by a vacuum drier, and the extracted component is weighed.

The remaining emulsifier amount is the amount of a remaining emulsifier extracted according to the above-described method, represented by wt% based on a polymer powder.

The degree of swelling the polymer powder (C) in methyl methacrylate is not particularly restricted, and preferably 1-fold or less or 20-fold or more. The degree of swelling herein referred to is given as follows. The polymer powder (C) is charged into a 100 ml measuring cylinder, compacted by soft tapping several times by 5 ml and cooled to 5°C or less, then, methyl methacrylate which has been cooled to 5°C or less is charged therein so that the total amount reaches 100 ml, the mixture is stirred quickly so as to obtain whole uniformity, then, the measuring cylinder is kept in a constant temperature vessel at 25°C for 1 hour, the volume of the polymer powder layer after swelling is divided by the volume (5 ml) before swelling. Therefore, when a part of the polymer powder (C) is dissolved and a part of this is not dissolved and remains, the degree of swelling is a value of 1-fold or less, and in the case of complete dissolution, the degree of swelling is 20-fold or more. When this degree of swelling is 1-fold or less or 20-fold or more, the dissolving speed of the polymer powder (C) into the component (A) increases, thickening tends to be possible in a short period of time, and the productivity of the acrylic SMC or BMC tends to increase. Further preferable range of this degree of swelling in methyl methacrylate is 0.9-fold or less.

The weight-average molecular weight of the polymer powder (C) is not particularly restricted, and when the weight-average molecular weight is higher, thickening effect tends to increase and the hot water-resistance of a molded article tends to be excellent, and preferably 100,000 or more. The upper limit thereof is also not particularly restricted, and preferably 5000000 or less from the standpoint of the kneading property of the acrylic SMC or BMC. The lower limit of this weight-average molecular weight is preferably 300,000 or more, particularly preferably 500,000 or more. The upper limit is more preferably 4,500,000 or less, particularly preferably 4,000,000 or less.

The structure of the primary particle of the polymer powder (C) is not particularly restricted, and may be a uniform particle structure having uniform composition, alternatively may also be a so-called core/shell structure constituted of a core layer and a shell layer having mutually different compositions, molecular weights and the like.

Particularly, from the standpoint of balance of the productivity of the polymer powder and the heat-resistance of the resulted polymer powder, the primary structure of the polymer powder (C) is preferably a core/shell structure. When an emulsion is endowed with a core/shell structure, there is a tendency that the heat-resistance of the resulted polymer powder (C) can be increased while maintaining the productivity high.

The glass transition temperatures of a core layer and shell layer are not particularly restricted, and preferably in the range from 50°C to 150°C. Particularly, it is preferable that at least the shell layer has a glass transition temperature of 90°C or less from the standpoint of productivity. When the glass transition temperature of the shell layer is 90°C or less, productivity in producing a polymer powder tends to be excellent. The upper limit of the grass transition temperature of this shell layer is preferably 85°C or less, particularly preferably 80°C or less.

The glass transition temperature (°C) in the present invention is, when the polymer component is a copolymer obtained by polymerization of n kinds of monomers, a value calculated according to the following formula (I) from glass transition temperatures (°C) of homopolymers of constituent n kinds of monomer components.

$$\frac{1}{Tg + 273} = \sum_{i=1}^{n} \frac{w_i}{Tg_{(i)} + 273} \qquad (I)$$

Tg: glass transition temperature (°C) of copolymer
$Tg_{(i)}$: glass transition temperature (°C) of homopolymer of i component
$w_i$: ratio by weight of i component, $\Sigma w_i = 1$

The average value of the glass transition temperature of the core layer and the glass transition temperature of the shell layer is not particularly restricted and preferably 65°C or more. The average value of the glass transition temperature herein referred to is a weighed-averaged value of the glass transition temperatures of the core layer and the shell layer according to the ratio by weight thereof. When the average valued of this glass transition temperature is 65°C or more, the heat resistance of a polymer powder tends to be high and the heat resistance of a molded article tends to be excellent. The lower limit of this glass transition temperature is more preferably 70°C or more, and particularly preferably 75°C or more.

The heat resistance of a molded article represents degree of difficulty of deformation at the molded article at higher temperature, and the deflection temperature under load measured according to JIS K 7207-1995 is the index of the heat resistance. This deflection temperature under load is not particularly restricted, and preferably 95°C or more, more preferably 105°C or more, particularly preferably 115°C or more.

It is preferable that the glass transition temperature of the core layer is higher than the glass transition temperature of the shell layer. The reason for this is that when the glass transition temperature of the core layer is higher than the glass transition temperature of the shell layer, there is a tendency that the productivity of a polymer powder and the heat-resistance of a molded article can be satisfied simultaneously.

The shell layer of a polymer powder is not particularly restricted, and preferably not cross-linked. When the shell layer is not cross-linked, the thickening property when used as a thickening agent tends to be excellent and the productivity tends to be excellent.

The core layer of a polymer powder is not particularly restricted, and preferably not cross-linked. When the core layer is not cross-linked, the thickening property when used as a thickening agent tends to be excellent and the productivity tends to be excellent.

The refractive index of the polymer powder (C) is not particularly restricted, and preferably from 1.47 to 1.51. When the refractive index is from 1.47 to 1.51, it is near the refractive index of an acrylic resin used as a matrix, and the transparency of a molded article tends to be excellent. The refractive index of the polymer powder is a value measured by an Abbe's refractometer using a sheet having a thickness of 0.3 mm obtained by press-molding under heat of a polymer powder.

The average particle size of the polymer powder (C) is not particularly restricted, and preferably in the range from 50 to 500 μm. When the average particle size is 50 μm or more, there are tendencies that the filtration property in producing a polymer powder is excellent and the productivity is excellent, and handling of the polymer powder is excellent. When the average particle size is 500 μm or less, there are tendencies that the dissolution speed of a polymer powder in the component (A), thickening is possible in a short period of time, and the productivity of the acrylic SMC or BMC increases. Further, in this case, the appearance of a molded article obtained by molding the acrylic SMC or BMC, particularly the gloss and surface smoothness thereof tend to be excellent. The lower limit of this average particle size is more preferably 70 μm or more. The upper limit thereof is more preferably 350 μm or less, particularly preferably 200 μm or less.

The content of the polymer powder (C) is not particularly restricted, and preferably from 0.1 to 30 wt% based on the total amount of the acrylic SMC or BMC. When this content is 0.1 wt% or more, higher thickening effect tends to be obtained, and when 30 wt% or less, the kneading property of the acrylic SMC or BMC tends to be excellent. The lower limit of this content is more preferably 1 wt% or more, particularly preferably 3 wt% or more. The upper limit thereof is more preferably 25 wt% or less, particularly preferably 20 wt% or less.

Given as examples of the constituent components (monomers and the like used for polymerization) of the polymer powder (C) are monofunctinal monomers such as methyl (meth)acrylate, alkyl (meth)acrylates carring an alkyl group having 2 to 20 carbon atoms, hydroxyalkyl (meth)acrylates carrying a hydroxyalkyl group having 1 to 20 carbon atoms, (meth)acrylates carrying an ester group having an aromatic ring such as benzyl (meth)acrylate and the like, (meth)acrylates carrying an ester group having a cyclohexane ring such as cyclohexyl (meth)acrylate and the like, (meth)acrylates carrying an ester group having a bicyclo ring such as isobornyl (meth)acrylate and the like, (meth) acrylates carrying an ester group having a tricyclo ring such as tricyclo[5 · 2 · 1 · 0$^{2,6}$]decanyl (meth)acrylate and the like, (meth)acrylates carrying an ester group having a fluorine atom such as 2,2,2-trifluoroethyl (meth)acrylate and the like, (meth)acrylates carrying an ester group having a cyclic ether structure such as glycidyl methacrylate, tetrahydrofurfuryl (meth)acrylate and the like, (meth)acrylic acid, (meth)acrylic acid metal salts, (meth)acrylamide, aromatic vinyl such as styrene and the like, and vinyl acetate, (meth)acrylonitrile, vinyl chloride, maleic anhydride, maleic acid, maleate, fumaric acid, fumarate and the like; and polyfunctional monomers such as ethylene glycol di(meth)acrylate, polyethylene glycol di(meth)acrylate, propylene glycol di(meth)acrylate, polypropylene glycol di(meth)acrylate, 1,3-butylene glycol di(meth)acrylate, 1,4-butylene glycol di(meth)acrylate, polybutylene glycol di(meth)acrylate, neopentyl glycol di(meth)acrylate, 1,6-hexanediol di(meth)acrylate, 1,9-nonanediol di(meth)acrylate, 1,10-decanediol di (meth)acrylate, dimethylolethane di(meth)acrylate, 1,1-dimethylolpropane di(meth)acrylate, trimethylolethane tri(meth) acrylate, trimethylolpropane tri(meth)acrylate, tetramethylolmethane tri(meth)acrylate, tetramethylolmethane di(meth) acrylate, and poly-valent esters of (meth)acrylic acid with poly-valent alcohol [e.g., pentaerythritol, dipentaerythritol and the like], allyl (meth)acrylate, divinylbenzene and the like. These monofunctional monomers may be polymerized alone to obtain a homopolymer if necessary, or two or more polyfunctional monomers may also be used in combination to obtain a copolymer, or alternatively, a monofunctional monomer and a polyfunctional monomer may be used to obtain a cross-linked polymer. In view of affinity with the component (A), a polymer containing a (meth)acrylic monomer component as the main constituent unit is preferable.

The method for producing the polymer powder (C) used in the present invention may advantageously be conducted by known means such as emulsion polymerization, suspension polymerization, solution polymerization, bulk polymerization and the like, and though is not restricted particularly, it is preferable that an emulsion obtained by emulsion polymerization is made into powder.

By making an emulsion obtained by emulsion polymerization into powder, a polymer powder having a secondary flocculate structure containing a small primary particle (emulsion particle) flocculated can be obtained, therefore, thickening is possible in a short period of time, and the productivity of the acrylic SMC or BMC tends to increase.

The surfactant used in emulsion polymerization is not particularly restricted, and a cationic surfactant, anionic surfactant, nonionic surfactant, reactive surfactant and the like are exemplified. These can be used alone or in combination of two or more if necessary.

Included as specific examples of the cationic surfactant are Quartamin 24P, Quartamin 60W, Quartamin 8W (each trade name) and the like manufactured by Kao Corp.

Included as specific examples of the cationic surfactant are Flake Marcel, Emal O, Emal TD, Emal Am Neopelex No. 25, Pellex OT-P, Pellex SS-H, Levenol WX, Levenol WZ, Latemul WX, Latemul ASK, Latemul PS, Demol N, Demol EP, Poiz 530, Homogenol L-18, Estamit TR-09 (each trade name) and the like manufactured by Kao Corp.

Included as specific examples of the nonionic surfactant are Emulgen 130 K, Emulgen 306 P, Emulgen 430, Emulgen 810, Emulgen 905, Emulgen 910, Emulgen 930, Emulgen A-60, Emulgen PP-150, Reodol TW-0120 (each trade name) and the like manufactured by Kao Corp.

Included as specific examples of the commercially available nonionic surfactant are Latemul S-120A, S-180A manufactured by Kao Corp., Adekaria Soap SE-5N, SE-10N, SE-20N, NE-10, NE-20, NE-30, NE-40, NE-50, NE-80, NE-100 manufactured by Asahi Denka Kogyo K.K., Antox-MS-60, Antox-MS-20, Antox-MS-2N, Antox-MS-NH4, RA-1020, RA-1120, RA-1820, RF-751, RMA-564, RMA-568, RMA-506, RMA-1120 manufactured by Nippon Nyukazai K. K. (each trade name) and the like.

The use amount of the surfactant is not particularly restricted, and preferably from 0.1 to 10 wt parts based on 100 parts by weight of monomers to be emulsion-polymerized from the standpoint of polymerization stability.

The method for making a powder in producing the polymer powder (C) by making an emulsion obtained by emulsion-polymerization in the present invention into a powder may advantageously be conducted by known means such as a coagulation method, spray drying method, freeze drying method and the like, and not restricted particularly, and powder making by a coagulation method is particularly preferable for obtaining a polymer powder having lower content of a remaining emulsifier. The coagulation method is not particularly restricted, and coagulation may advantageously be conducted by a known method such as a rapid coagulation method, organic solvent added coagulation method, slow coagulation method and the like.

The coagulation agent in effecting coagulation is not particularly restricted, and an acid or salt can be used and may advantageously be selected appropriately and used, corresponding to the surfactant used in emulsion-polymerization. Specific examples of the acid include sulfuric acid, and specific examples of the salt include aluminum sulfate, calcium acetate, magnesium sulfate and the like.

The temperature in coagulating an emulsion which has been emulsion-polymerized is not particularly restricted, and the coagulation may advantageously be conducted at a temperature of not less than the glass transition temperature (Tg) of the shell layer of a polymer emulsion-polymerized. When Tg of a polymer emulsion-polymerized is higher, an organic solvent may also be added to the emulsion to reduce the apparent Tg before coagulation. The organic solvent used in this procedure is not particularly restricted, and examples thereof include aliphatic hydrocarbons such as hexane, heptane, and the like.

The drying temperature of the polymer powder (C) obtained by filtration after coagulating an emulsion emulsion-polymerized according to the above-described method is not particularly restricted, and the drying is preferably conducted at a temperature of not more than Tg of the shell layer of the polymer powder (C).

The acrylic SMC or BMC of the present invention contains the above-described components (A) to (C) as basic constituent components, and the inorganic filler-containing resin particle (D) can be further added to this, and by molding the resulted mixed, granite-like artificial marble having a clear grain pattern and excellent design can be obtained.

The content of the component (D) is not particularly restricted, and preferably from 0.1 to 50 wt% based on the total amount of the acrylic SMC or BMC. When this content is 0.1 wt% or more, a grain pattern having excellent design tends to be obtained, and when 50 wt% or less, the kneading property in producing the acrylic SMC or BMC tends to be excellent. The lower limit of this content is more preferably 1 wt% or more, particularly preferably 5 wt% or more. The upper limit thereof is more preferably 40 wt% or less, particularly preferably 30 wt% or less.

The resin constituting the inorganic filler-containing resin particle (D) is not restricted providing it is a resin not dissolved in methyl methacrylate, and examples thereof include cross-linked acrylic resins, cross-linked polyester-based resins, cross-linked styrene-based resins and the like. The cross-linked acrylic resins are preferable since then a molded article having high affinity with the component (A) and having beautiful appearance is obtained. This cross-linked acrylic resin may also contain a non-cross-linked acrylic polymer.

The inorganic filler constituting the inorganic filler-containing resin particle (D) is preferably used in an amount from 10 to 90 wt% based on the total amount of the component (D). When this use amount is 10 wt% or more, the texture and heat-resistance of a molded article tend to be excellent, and when 90 wt% or less, there is a tendency that a molded article having high strength can be obtained.

As the inorganic filler constituting the inorganic filler-containing resin particle (D), inorganic fillers listed for the component (B) can be used, and two or more of them can be used in combination. Further, different inorganic fillers may also be used in the component (D) and the component (B).

Also, the inorganic filler-containing resin particle (D) may contain a pigment if necessary.

The particle size of the inorganic filler-containing resin particle (D) is not particularly restricted, and those particles having a size of not more than the thickness of a molded article can be used. The inorganic filler-containing resin particle (D) may be used alone, or two or more of them having different colors and particle sizes may also be used.

The method for producing the inorganic filler-containing resin particle (D) is not particularly restricted, and there is, for example, a method in which a resin molded article containing inorganic fillers obtained by polymerization and curing by a heat press method, casting method and the like is ground, and ground particles are classified by a sieve. For example, a method in which acrylic artificial marble is ground and classified is preferable.

Further, to the acrylic SMC or BMC of the present invention, if necessary, curing agents such as inorganic peroxides such as lauroyl peroxide (10 hours half life temperature = 62°C ), stearoyl peroxide (10 hours half life temperature = 62°C), 1,1,3,3-tetramethylbutyl peroxy-2-ethyl hexanoate (10 hours half life temperature = 65°C), t-hexyl peroxy-2-ethyl hexanoate (10 hours half life temperature = 70°C), t-butyl perox-2-ethyl hexanoate (10 hours half life temperature = 72°C), benzoyl peroxide (10 hours half life temperature = 73°C), di-t-butyl perox-2-methylcyclohexane (10 hours half life temperature = 83 °C), 1,1-bis(t-hexyl peroxy)-3,5,5-trimethylcyclohexane (10 hours half life temperature = 87°C), 1,1-bis(t-hexyl peroxy)cyclohexane (10 hours half life temperature =87°C), 1,1-bis(t-butyl peroxy)-3,5,5-trimethyl cyclohexane (10 hours half life temperature = 90°C), 1,1-bis(t-butyl peroxy)cyclohexane (10 hours half life temperature = 91°C), 1,1-bis(t-butyl peroxy)cyclododecane (10 hours half life temperature = 95°C), t-hexyl peroxyisopropyl carbonate (10 hours half life temperature = 95°C), t-butyl peroxy-3,5,5-trimethyl hexanoate (10 hours half life temperature = 97°C), t-butyl peroxylaurate (10 hours half life temperature = 98°C), t-butyl peroxyisoropyl carbonate (10 hours half life temperature = 99°C), t-butyl peroxy-2-ethylhexyl carbonate (10 hours half life temperature = 99°C), t-hexyl peroxybenzoate (10 hours half life temperature = 99°C), t-amyl peroxybenzoate (10 hours half life temperature = 100°C), 2,2-bis(t-butyl peroxy)butane (10 hours half life temperature = 103°C), t-butyl peroxybenzoate (10 hours half life temperature = 104°C), n-butyl-4,4-bis(t-butyl peroxy) valeate (10 hours half life temperature = 105°C), dicumyl peroxide (10 hours half life temperature = 116°C) and the like; and azo compounds such as 2,2'-azobis-2,4-dimethylvaleronitrile (10 hours half life temperature = 51°C), 2,2'-azobisisobutyronitrile (10 hours half life temperature = 65°C), 2,2'-azobis(2-methylbutyronitrile) (10 hours half life temperature = 67°C), 1,1'-azobis(cyclohexane-1-carbonitrile (10 hours half life temperature = 88°C) and the like can be added, in addition to the above-described components. These curing agents can be selected appropriately and used according to the molding temperature in molding the acrylic SMC or BMC, and may be used alone or two or more of them having different 10 hours half life temperatures may also be used in combination.

Further, to the acrylic SMC or BMC of the present invention, various additives can be added if required such as reinforcing agents like glass fiber, carbon fiber and the like; polymerization inhibitors; coloring agents; low shrinkage agents; internal releasing agents; and the like, in addition to the above-described curing agents.

The acrylic SMC or BMC of the present invention can be produced by adding the above-described component (A), component (B) and component (C), and if desired, the component (D) and other components and kneading them. The order for kneading the components is not particularly restricted, and all components may be kneaded in one time or parts of the components may be previously mixed.

As the component (A), an acrylic monomer or acrylic monomer mixture may be used as it is, or may also be prepared as an acrylic syrup for use as described above. Particularly, use of an acrylic monomer or acrylic monomer mixture as it is is preferable since a process for preparing an acrylic syrup can be omitted.

In the present invention, the kneading temperature is a temperature of a heat medium for heating or cooling used in kneading. The heat medium is not particularly restricted, and water, ethylene glycol, silicon oil and the like are used. The temperature of BMC obtained by kneading may sometimes be higher or may also be lower than the temperature of the heat medium since the BMC temperature differs depending on conditions such as compositions, raw material temperatures, kneading time, shear heat generation and the like.

The kneading temperature is not particularly restricted, and preferably from 20 to 70°C. When the kneading temperature is 20°C or more, the thickening speed of the acrylic SMC or BMC tends to increase and the productivity of the acrylic SMC or BMC tends to increase. On the other hand, when the kneading temperature is 70°C or less, the storage stability of the acrylic SMC or BMC tends to be excellent and when the inorganic filler-containing resin particle (D) is compounded to produce grain-like acrylic SMC or BMC, the clearness of the grain-pattern tends to be excellent. The lower limit of the kneading temperature is more preferably 25°C or more, particularly preferably 30°C or more. The upper limit thereof is more preferably 60°C or less, particularly preferably 55°C or less.

The kneading time is not particularly restricted, and preferably 20 minutes or less. When the kneading time is 20 minutes or less, the storage stability of the acrylic SMC or BMC tends to be excellent, and when the inorganic filler-containing resin particle (D) is compounded to produce grain-like acrylic SMC or BMC, the clearness of the grain-pattern tends to be excellent. The upper limit of the kneading time is more preferably 15 minutes or less, particularly preferably 10 minutes or less. The lower limit thereof is not particularly restricted, and preferably 10 seconds or more, more preferably 30 seconds or more.

The acrylic SMC or BMC of the present invention is thickened to level of no stickiness even in such a short period of time, therefore, handling thereof is excellent even directly after kneading. This acrylic SMC or BMC may be subjected to press molding without aging, or may also be aged if necessary before press-molding.

In the present invention, when the kneading temperature and the kneading time are within the above-described ranges, the total heat amount received by the acrylic SMC or BMC in kneading decreases, therefore, the storage stability of the acrylic SMC or BMC obtained tends to be excellent.

Furthermore, in the case of obtaining granite-like artificial marble having a grain-pattern by compounding the inorganic filler-containing resin particle (D) into the acrylic SMC or BMC in the present invention, when the kneading temperature and the kneading time are within the above-described ranges, the swelling and dissolution of the inorganic filler-containing resin particle (D) in the acrylic monomer or acrylic syrup (A) tend to be suppressed, and there is a tendency that the grain-pattern of the resulted artificial marble becomes clear giving excellent appearance.

In the present invention, a dough-like material obtained by thickening the above-described constituent components may be used as it is, or the above-described constituent components may be kneaded to be thickened to give a dough-like material before being extruded to provide a given shape, and further, it may also be permissible that the above-described constituent components are kneaded and simultaneously thickened and extruded so that the kneading, thickening and extrusion are conducted in one step and the mixture is shaped into a given form to produce an acrylic SMC or BMC continuously. Among other, the method in which the above-described constituent components are kneaded and simultaneously thickened and extruded so that the kneading, thickening and extrusion are conducted in one step and the mixture is shaped into a given form to produce an acrylic SMC or BMC continuously is preferable due to extremely high productivity.

In the present invention, the method for kneading constituent components is not particularly restricted, and a kneader, mixer, roll, extruder, kneading extruder and the like can be used. Particularly when constituent components are kneaded and simultaneously thickened and extruded so that the kneading, thickening and extrusion are conducted in one step and the mixture is shaped into a given form to produce an acrylic SMC or BMC continuously, as described above, a kneading extruder is preferably used.

The kneading extruder may be one having kneading function and extrusion function inside, and examples thereof include, but are not limited to, those having a screw. This screw preferably has a structure in which fluid for temperature control can be passed inside, and the barrel also preferably has a structure in which temperature can be controlled.

The diameter, length, groove depth, revolution, temperature and the like of a screw may advantageously be selected appropriately depending on the viscosity and the amount treated of a mixture which are required. The screw may be monoaxial, biaxial or triaxial and is not particularly restricted, and biaxial or triaxial is preferable from the standpoint of kneading function.

Then, one example of the kneading extrusion continuous shaping production method of the acrylic SMC or BMC of the present invention will be illustrated referring to drawings.

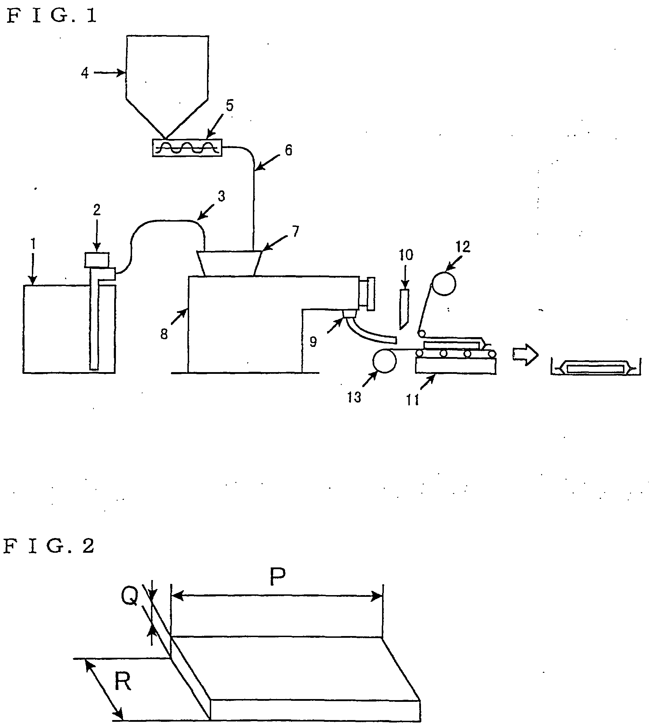

An apparatus shown in Fig. 1 is used, liquid components among constituent components of an acrylic SMC or BMC are charge into a tank 1. As the liquid components herein used, those pass through a liquid feeding pump 2 and a liquid feeding tube 3 may be used, and the above-described components may also be mixed previously. As the combination of components previously mixed, various combinations are possible. For example, combinations of the acrylic monomer or acrylic syrup (A) with a curing agent, polymerization inhibitor, coloring agent, internal releasing agent and the like are possible. When a liquid component containing mixed components is used, it is preferable that components are previously weighed and mixed sufficiently before placing into the tank 1.

It is preferable that the tank 1, liquid feeding pump 1 and liquid feeding tube 3 are made of materials so selected that parts in contact with liquid are not chemically corroded by the liquid components. The liquid feeding pump 2 may advantageously, for example, be one having quantitative feeding ability typified by a gear pump and snake pump, and preferably selected in view of physical properties of the liquid components such as viscosity and the like.

On the other hand, liquid components among constituent components of the acrylic SMC or BMC are charged into a vessel 4. As the liquid components herein used, those pass through a quantitative feeder 5 and a piping 6 may be used, and the above-described components may also be mixed previously. As the combination of components previously mixed, various combinations are possible. For example, combinations of the inorganic filler (B) with a coloring agent, internal releasing agent and the like are listed. A combination of other vessel 4, quantitative feeder 5 and piping 6 may also be added depending on the kinds of powder components. When a liquid component containing mixed components is used, it is preferable that components are previously weighed and mixed sufficiently before placing into the tank 4.

When a powdery component prepared by mixing components having different particle sizes and specific gravities is charged into the vessel 4, it is preferable that the vessel 4 has a function that can conduct mixing such as a stirring blade and the like, for suppressing classification in the vessel 4. It is preferable that the vessel 4 is made of a material which is not influenced chemically and physically by the powdery component.

The quantitative feeder 5 is for example a screw feeder or the like, and may advantageously one having such powder feeding ability. It is preferable that the ratio of the feeding amount of the quantitative feeder 5 to the feeding amount of the liquid feeding pump 2 (ratio by weight) is as constant as possible. Therefore, it is preferable that the liquid component and powdery component are charged into a hopper 7 while constantly measuring the weights thereof and controlling the charging amounts into. For the control, for example, a method in which weights of the tank 1 and vessel 5 are measured, and other known methods can be used.

The piping 6 is used for charging a powdery component into the hopper 7. The liquid component and powdery component fed into the hopper are fed to a kneading extruder 8. The fed liquid component and powdery component are kneaded by the kneading extruder 8 and simultaneously, the kneaded material is thickened in the kneading extruder 8 to give a dough-like material.

An extrusion die 9 is placed on the lower side of the leading end of the kneading extruder 8 and regulate the cross form of a dough-like material extruded continuously. The dough-like material thickened in the kneading extruder 8 is extruded through the die 9 to be shaped into a SMC or BMC having a given form. This shaped material is cut into a given length by a cutter 10. The cutter 10 is for example a guillotine cutter, and is not limited to this providing it has the equivalent function.

Fig. 2 is a view showing schematically one example of the BMC shaped into a sheet. In Fig. 2, P represents length, Q represents thickness and R represents width. P, Q and R may advantageously be controlled appropriately to given dimensions, respectively. This BMC shaped material may also be transported to a mold directly after production thereof, and molded.

Further, this BMC shaped material, may also be carried on a conveyer 11 after discharged from the die 9, as shown in Fig. 1. When a long period of time is required before molding, it is preferable to cover the upper side and lower side with cover films 12 and 13 respectively for sealing, as shown in Fig. 1. It is preferable to use cover films 12 and 13 manifesting barrier property against monomers contained in the BMC shaped material. As the film having barrier property, a polyamide film, poval film, ethylene-polyvinyl alcohol copolymer film and the like are listed. This cover film may also be a laminated film obtained by laminating two or more layers of films.

When the BMC shaped material sealed with cover films is carried, it is preferable to accommodate the shaped material in a vessel and the like for protecting the shaped form.

Then, the method for producing the acrylic artificial marble of the present invention will be described.

In the present invention, acrylic artificial marble can be obtained by filling the acrylic SMC or BMC as described above in a mold, and curing this under heat and pressure. Specific examples of this curing under heat and pressure include, but are not limited to, a compression molding method, injection molding method, extrusion molding method and the like.

In this case, the heating temperature is not particularly restricted, and preferably in the range from 80 to 150°C. When the heating temperature is 80°C or more, the curing time can be reduced and productivity tends to be higher, and when 150°C or less, appearance of the resulting molded article tends to be excellent. The lower limit of this heating temperature is more preferably 85°C or more, and the upper limit thereof is more preferably 140°C or less. Further, heat-curing may also be conducted maintaining temperature difference between an upper mold and a lower mold in this temperature range.

The pressing value is not particularly restricted, and preferably in the range from 1 to 20 MPa. When this pressing value is 1 MPa or more, filling property of an acrylic SMC or BMC into a mold tends to be excellent, and when 20 MPa or less, excellent appearance of a molded article tends to be obtained. The lower limit of the pressing value is more preferably 2 MPa or more, and the upper limit thereof is more preferably 15 MPa or less.

The molding time may be appropriately selected depending on the thickness of a molded article.

The following examples further illustrate the present invention specifically below. All parts in the examples are by weight.

<Physical property of polymer powder>

Amount of remaining emulsifier: Weighed about 1 g of a polymer powder was extracted at 105°C for 3 hours three times using methanol in a pressure bottle, a dry residue in the extracted solution was extracted twice with hot water, filtrated through a 0.5 μm filter, the filtrate was concentrated before drying by a vacuum drier, and the extracted component was weighed, and represented in terms of % based on the weight of the polymer powder.
Average particle size: It was measured using laser scattering particle size distribution analyzer (LA-910, manufactured by HORIBA Ltd.)
Degree of swelling: A polymer powder was charged into a 100 ml measuring cylinder, compacted by soft tapping several times by 5 ml and cooled to 5°C or less, then, methyl methacrylate which had been cooled to 5°C or less was charged therein so that the total amount reached 100 ml, the mixture was stirred quickly so as to obtain whole uniformity, then, the measuring cylinder was kept in a constant temperature vessel at 25°C for 1 hour, the volume of the polymer layer after swelling was measured, and the degree of swelling was represented by the ratio of this value to volume (5 ml) before swelling.
Weight average molecular weight: It is a value calculated in terms of polystyrene according to a GPC method, and was measured under the following conditions.

Apparatus: High performance GPC apparatus HLC-8120, manufactured by Tosoh Corp.
Column: three TSKgelGMHXL are connected in series, manufactured by Tosoh Corp.
Oven temperature: 38°C
Elution solution: Tetrahydrofuran
Sample concentration: 0.4 % by weight
Flow rate: 1 ml/minute
Flow amount: 0.1 ml
Detector: RI (differential refractometer)

Refractive index: It was measured by an Abbe's refractometer using a sheet having a thickness of 0.3 mm obtained by press-molding under heat of a polymer powder.

Glass transition temperature: When a polymer component was a copolymer obtained by polymerization of n kinds of monomers, a value was calculated according to the following formula (I) from glass transition temperatures (°C) of homopolymers of constituent n kinds of monomer components, and numerical values of decimal point or less was rounded. As the glass transition temperature of a homopolymer, a value described in "Polymer Data Handbook" edited by Polymer Society was used.

$$\frac{1}{Tg + 273} = \sum_{i=1}^{n} \frac{w_i}{Tg_{(i)} + 273} \qquad (\text{I})$$

Tg: glass transition temperature (°C) of copolymer
$Tg_{(i)}$: glass transition temperature (°C) of homopolymer of i component
$w_i$: ratio by weight of i component, $\Sigma w_i = 1$

<Productivity of coagulation>

⊚: Filtration property when an emulsion is coagulated and a polymer powder is filtrated is extremely excellent and the productivity of the coagulated powder is extremely high.
○+ : Filtration property when an emulsion is coagulated and a polymer powder is filtrated is excellent and the productivity of the coagulated powder is high.
○: An emulsion can be coagulated and a polymer powder can be filtrated.

<Thickening property of acrylic BMC>

○: It was thickened to be a BMC dough-like material manifesting excellent handling property, thickened to condition of no stickiness directly after completion of kneading.
Δ : It was thickened to a certain extent directly after completion of kneading to be a BMC dough-like material, however, the material had stickiness and manifested poor handling property.
×: It was not thickened directly after completion of kneading, and in semi-liquid condition giving poor handling property. Aging at 60°C for 24 hours or more was required to thicken this semi-liquid kneaded material to obtain a BMC dough-like material.

<Clearness of grain pattern>

○: It was extremely clear and has extremely excellent design.
×: A grain pattern material, inorganic filler-containing resin particle was melted, and granite-like appearance was not obtained and the appearance was extremely poor.

<Heat-resistance of molded article>

⊚: Deflection temperature under load of a molded article is extremely high, and heat-resistance is extremely high.
○: Deflection temperature under load of a molded article is high, and heat-resistance is high.
△ : Deflection temperature under load of a molded article is slightly low, and heat-resistance is low.

< Deflection temperature under load of molded article >

It was measured according to JIS K 7207-1995

<Hot water-resistance of molded article>

A molded plate was immersed in hot water of 98°C for 120 hours, or in hot water of 90°C for 300 hours or 700 hours, and color changes (whiteness, color difference) were compared to the plate before immersion.

○: Almost no difference was found in whiteness and color difference before and after immersion into hot water.
△: Slight difference was found in whiteness and color difference before and after immersion into hot water.
×: Large difference was found in whiteness and color difference before and after immersion into hot water.

(1) Production Example of polymer powder (P-1)

Into a reaction vessel equipped with a cooling tube, thermometer, stirrer, dropping apparatus and nitrogen introducing tube was charged 930 parts of distilled water, 4 parts of sodium alkyldiphenyl ether disulfonate (trade name: "Pellex SSH", manufactured by Kao Corp.) as a surfactant and 1 part of potassium persulfate as a polymerization initiator, and the resulting mixture was heated at 70°C while stirring under nitrogen atmosphere. To this was added a mixture composed of 500 parts of methyl methacrylate and 5 parts of a surfactant, sodium dialkylsulfosuccinate (trade name: "Pellex CT-P", manufactured by Kao Corp.) dropwise over 3 hours, then, kept for 1 hour, further heated up to 80°C and kept for 1 hour, then cooled to room temperature to complete the emulsion polymerization, giving an emulsion. The primary particle of the polymer of the resulted emulsion had an average particle size of 0.10 μm.

Into a vessel equipped with a thermometer, stirrer, and nitrogen introducing tube was charged 290 parts of distilled water and 10 parts of aluminum sulfate, the mixture was stirred for dissolution of aluminum sulfate. Then, vapor was introduced while stirring this aluminum sulfate aqueous solution to raise the temperature up to 50°C, then, 170 parts of the above-described emulsion was added. The mixture was kept for 5 minutes at 50°C for coagulation of the polymer particle, then, heated up to 95°C and kept for 5 minutes to solidify the coagulated polymer particle, completing the coagulation. The coagulated polymer particle was filtrated and washed with water, then, dried to obtain a polymer powder (P-1).

The resulted polymer powder (P-1) had an average particle size of 30 μm, and the amount of a remaining emulsifier was 0. 30%, the refractive index was 1.49 and the weight-average molecular weight was 600,000. The degree of swelling in MMA was evaluated to find that most of the powder was dissolved, however, a partial undissolved portion remained, and the degree of swelling was 0.2.

(2) Production Example of polymer powder (P-2)

Into a reaction vessel equipped with a cooling tube, thermometer, stirrer, and nitrogen introducing tube was charged 1150 parts of distilled water, 5 parts of a special carboxylic acid type surfactant (trade name: Latemul ASK, manufactured by Kao Corp.) as a surfactant and 1 part of potassium persulfate as a polymerization initiator, 460 parts of methyl methacrylate and 40 parts of ethyl acrylate as monomers, and 0.15 parts of n-octylmercaptane as a chain transfer agent, and the resulting mixture was heated at 50°C while stirring under nitrogen atmosphere. This was kept for 5 hours as it was, and cooled to complete the emulsion polymerization, obtaining an emulsion. The primary particle of the polymer of the resulted emulsion had ar average particle size of 0.20 μm.

Into a vessel equipped with a thermometer, stirrer, and nitrogen introducing tube was charged 300 parts of distilled water and 0.2 parts of sulfuric acid. Then, vapor was introduced while stirring this sulfuric acid aqueous solution to raise the temperature up to 40°C, then, 150 parts of the above-described emulsion was added, the mixture was kept for 5 minutes at 40°C for coagulation of the polymer particle. Then, after heated up to 65°C, n-heptane was added, and kept for 5 minutes at 65°C to solidify the coagulated polymer particle. Then, the temperature was raised gradually to evaporate n-heptane, heated up to 95°C, and kept for 5 minutes to solidify the product, completing the coagulation. The coagulated polymer particle was filtrated, washed and dried to obtain a polymer powder (P-2).

The resulted polymer powder (P-2) had an average particle size of 70 μm, and the amount of a remaining emulsifier was 0. 30%, and the weight-average molecular weight was 550,000. The degree of swelling in MMA was evaluated to find that though a part of the powder was dissolved, a partial undissolved portion remained, and the degree of swelling was 0.5.

(3) Production Examples of polymer powders (P-3) to (P-7)

Emulsion polymerization was effected under the same conditions as for Production Example of polymer powder (P-2) except that the monomers used in the emulsion polymerization were changed to compositions shown in Table 1, and the resulted emulsions were coagulated under the same conditions as for Production Example of polymer powder (P-2), to obtain polymer powders. The physical properties of the resulted polymer powders are shown in Table 1.

(4) Production Example of polymer powder (P-8)

Emulsion polymerization was effected under the same conditions as for Production Example of polymer powder (P-2) except that the monomers used in the emulsion polymerization were changed to 400 parts of methyl methacrylate and 100 parts of i-butyl methacrylate and the amount of the chain transfer agent was changed to 0.004 parts, and the resulted emulsions were coagulated under the same conditions as for Production Example of polymer powder (P-2), to obtain a polymer powder (P-8). The physical properties of the resulted polymer powder (P-8) are shown in Table 1.

(5) Production Example of polymer powder (P-9)

Into a reaction vessel equipped with a cooling tube, thermometer, stirrer, and nitrogen introducing tube was charged 1150 parts of distilled water, 5 parts of a special carboxylic acid type surfactant (trade name: Latemul ASK, manufactured by Kao Corp.) as a surfactant and 300 parts of methyl methacrylate as a monomer, the mixture was stirred under nitrogen atmosphere while being heated to 70°C. To this was added 1 part of potassium persulfate. The outer temperature was kept at 70°C, the polymerization heat generation peak was confirmed, then, kept for 90 minutes to polymerize a core layer. Then, 160 parts of methyl methacrylate and 40 parts of ethyl acrylate were added dropwise over 30 minutes, kept for 90 minutes as it was to polymerize a shell layer, then, cooled to complete the emulsion polymerization, giving an emulsion having a core/shell structure in which the glass transition temperature of the core layer was 105°C, the glass transition temperature of the shell layer was 70°C and the average value of the glass transition temperatures of the core layer and the shell layer was 91°C.

Coagulation was effected under the same conditions as for Production Example of polymer powder (P-2), to obtain a polymer powder (P-9). The resulted polymer powder (P-9) had an average particle size of 70 μm, and the amount of a remaining emulsifier was 0. 28%, the refractive index was 1.49 and the weight-average molecular weight was 940,000.

(6) Production Examples of polymer powders (P-10) and (P-11)

Emulsion polymerization was effected under the same conditions as for Production Example of polymer powder (P-9) except that the monomers used in the emulsion polymerization were changed to compositions shown in Table 1 and the dropping time of the shell layer was changed to 1 hour, to obtain emulsions having a core/shell structure. The resulted emulsions were coagulated under the same conditions as for Production Example of polymer powder (P-2), to obtain polymer powders. The physical properties of the resulted polymer powders are shown in Table 1.

(7) Production Example of polymer powder (P-12)

The emulsion obtained in Production Example of polymer powder (P-1) was subjected to spray-drying treatment at inlet temperature/outlet temperature = 150°C/90°C using a spray drier (type L-8, manufactured by Ohkawara Kakouhki Co. Ltd.), to obtain a polymer powder (P-12). The physical properties of the resulted polymer powder (P-12) are shown in Table 1.

(8) Production Example of polymer powder (P-13)

Into a reaction vessel equipped with a cooling tube, thermometer, stirrer, dropping apparatus and nitrogen introducing tube was charged 925 parts of distilled water, 5 parts of sodium alkyldiphenyl ether disulfonate (trade name: "Pellex SSH", manufactured by Kao Corp.) as a surfactant and 0.25 parts of potassium persulfate, and the resulting mixture was heated at 70°C while stirring under nitrogen atmosphere. To this was added a mixture composed of 149.85 parts of methyl methacrylate, 0.15 parts of 1,3-butylene glycol dimethacrylate (trade name: Acryester BD, manufactured by Mitsubishi Rayon Co., Ltd.) and 5 parts of sodium dialkylsulfosuccinate (trade name: "Pellex OT-P", manufactured by Kao Corp.) dropwise over 1.5 hours, then, kept for 1 hour, subsequently 350 parts of methyl methacrylate was added over 3.5 hours, then, kept for 1 hour, further heated up to 80°C and kept for 1 hour to complete the emulsion polymerization, giving an emulsion.

The resulted emulsion was subjected to spray-drying using a spray drier type L-8 manufactured by Ohkawara Kakouhki Co. Ltd.), to obtain a polymer powder (P-13) having a core/shell structure. The average particle size of the resulted polymer powder (P-13) was 20 μm, the amount of a remaining emulsifier was 1.9%, and the refractive index was 1.49.

(9) Production Example of polymer powder (P-14)

Into a reaction vessel equipped with a cooling tube, thermometer, stirrer, dropping apparatus, and nitrogen introducing tube was charged 1850 parts of distilled water, 6 parts sodium dodecylbenzene sulfonate as a surfactant, and 420 parts of methyl methacrylate and 180 parts of n-butyl acrylate as polymerization components, and the mixture was stirred under nitrogen atmosphere while being heated to 60°C. To this was added 5 parts of potassium persulfate as a polymerization initiator. The outer temperature was kept at 60°C, the polymerization peak was confirmed, then, kept for 60 minutes to polymerize a core layer. Then, the temperature was controlled to 70°C, 400 parts of methyl methacrylate was added dropwise over 3 hours, further kept for 1 hour to polymerize a shell layer, then, cooled to room temperature to complete the emulsion polymerization, giving an emulsion. The resulted emulsion was subjected to spray-drying using a spray drier type L-8 manufactured by Ohkawara Kakouhki Co. Ltd.), to obtain a polymer powder (P-14) having a core/shell structure.

The average particle size of the resulted polymer powder (P-14) was 27 μm, the refractive index was 1.49, and the weight-average molecular weight was 270,000.

(10) Production Example of polymer powder (P-15)

Into a reaction vessel equipped with a cooling tube, thermometer, stirrer, and nitrogen introducing tube was charged 800 parts of distilled water and 1 part of polyvinyl alcohol (degree of saponification: 88%, degree of polymerization: 1000) dissolved in the distilled water, then, to this was added a solution obtained by dissolving 0.8 parts of azobisisobutyronitrile as a polymerization initiator and 1.2 parts of n-dodecylmercaptane as a chain transfer agent into a monomer mixture composed of 360 parts of methyl mathacrylate and 40 parts of methyl acrylate, and the mixture was heated to 80°C over 1 hour while stirring at 300 rpm under nitrogen atmosphere and heated under the same conditions for 2 hours. Then, the mixture was heated up to 90°C and heated for 2 hours before cooling to room temperature to complete the suspension polymerization. The resulted suspension was filtrated and washed, then, dried by a hot air drier at 50°C, to obtain a polymer powder (P-15) having an average particle size of 350 μm. The physical properties of the resulted polymer powder (P-15) are shown in Table 1.

Table 1

| | Composition (wt%) upper: core lower: shell | Production method of powder | Amount of remaining emulsifier (%) | Degree of swelling | Weight-average molecular weight | Refractive index | Average particle size (μm) | Tg (°C) upper: core int.md.: shell lower: average | Productivity of coagulation |
|---|---|---|---|---|---|---|---|---|---|
| P-1 | MMA=100 | Emulsion polymerization / coagulation | 0.30 | 0.2 | 600,000 | 1.49 | 30 | — — 105 | ○ |
| P-2 | MMA/EA=92/8 | Emulsion polymerization / coagulation | 0.30 | 0.5 | 530,000 | 1.49 | 70 | — — 91 | ○+ |
| P-3 | MMA/EA=86/14 | Emulsion polymerization / coagulation | 0.28 | 0.7 | 550,000 | 1.49 | 120 | — — 81 | ○+ |
| P-4 | MMA/EA=80/20 | Emulsion polymerization / coagulation | 0.18 | 0.8 | 550,000 | 1.49 | 150 | — — 70 | ◎ |
| P-5 | MMA/nBA=94/6 | Emulsion polymerization / coagulation | 0.23 | 0.6 | 580,000 | 1.49 | 100 | — — 89 | ○+ |
| P-6 | MMA/MA=80/20 | Emulsion polymerization / coagulation | 0.27 | 0.7 | 600,000 | 1.49 | 100 | — — 93 | ○+ |
| P-7 | MMA/nBMA=86/14 | Emulsion polymerization / coagulation | 0.25 | 0.5 | 560,000 | 1.49 | 70 | — — 90 | ○+ |
| P-8 | MMA/iBMA=80/20 | Emulsion polymerization / coagulation | 0.27 | 0.6 | 3,800,000 | 1.49 | 70 | — — 93 | ○+ |

EP 1 146 023 A1

EP 1 146 023 A1

Table 1 (cont.)

| P- | composition | method | | | | | | | |
|---|---|---|---|---|---|---|---|---|---|
| P-9 | MMA=60<br>MMA/EA=32/8 | Emulsion polymerization / coagulation | 0.28 | 0.8 | 940,000 | 1.49 | 70 | 105<br>70<br>91 | ○+ |
| P-10 | MMA=30<br>MMA/EA=56/14 | Emulsion polymerization / coagulation | 0.21 | 0.5 | 780,000 | 1.49 | 160 | 105<br>70<br>81 | ◎ |
| P-11 | MMA=30<br>MMA/nBA=60/10 | Emulsion polymerization / coagulation | 0.20 | 0.5 | 800,000 | 1.49 | 165 | 105<br>69<br>80 | ◎ |
| P-12 | MMA=100 | Emulsion polymerization / spray-drying | 1.7 | 20≦ | 600,000 | 1.49 | 30 | —<br>—<br>105 | — |
| P-13 | MMA/BMA<br>=29.97/0.03<br>MMA=70 | Emulsion polymerization / spray-drying | 1.9 | 20≦ | — | 1.49 | 20 | —<br>105<br>— | — |
| P-14 | MMA/nBA=42/18<br>MMA=40 | Emulsion polymerization / spray-drying | 1.0 | 20≦ | 270,000 | 1.49 | 27 | 37<br>105<br>64 | — |
| P-15 | MMA/MA=90/10 | Suspension polymerization / drying | 0.001 | 1.2 | 100,000 | 1.49 | 350 | —<br>—<br>93 | — |

Abbreviations in Table 1 are shown below.

MMA: methyl methacrylate, MA: methyl acrylate, EA: ethyl acrylate, nBA: n-butyl acrylate, nBMA: n-butyl methacrylate, iBMA: i-butyl methacrylate, BMDA: 1,3-butylene glycol dimethacrylate,
Tg: glass transition temperature.

(12) Production Example of inorganic filler-containing resin particle (D)

To a monomer mixture composed of 23 parts of methyl methacrylate and 2 parts of ethylene glycol dimethacrylate, 0.025 parts of 2,6-di-t-butyl-4-methylphenol (trade name: Sumilizer BHT, manufactured by Sumitomo Chemical Co., Ltd.) as a polymerization inhibitor, 0.5 parts of t-amyl peroxy-3,5,5-trimethyl hexanoate (trade name: Kayaester AN, manufactured by Kayaku Akuzo K.K., 10 hours half life temperature = 95°C) as a curing agent, 0.15 parts of zinc stearate as an internal releasing agent, 60 parts of aluminum hydroxide (trade name: "CWL-325J", manufactured by Sumitomo Chemical Co., Ltd.) as an inorganic filler, 0.05 parts of a white inorganic pigment or black inorganic pigment as a coloring agent, and 15 parts of the polymer powder (P-1) obtained in Production Example (1) as a thickening agent, and the mixture was kneaded for 10 minutes by a kneader to obtain an acrylic BMC.
Then, this acrylic BMC was filled in a 200 mm square flat plate molding mold, and cured under heat and pressure for 10 minutes under conditions of a upper mold temperature of 130°C, a lower mold temperature of 115°C and a pressure of 10 MPa, to obtain white or black acrylic artificial marble having a thickness of 10 mm. The resulted acrylic artificial marble was crushed by a crusher, and classified through a sieve to obtain a white or black inorganic filler-containing resin particle (D).

[Example 1]

6.5 parts of methyl methacrylate, 6.5 parts of isobornyl methacrylate (trade name: Acryester IBX, manufactured by Mitsubishi Rayon Co., Ltd.) and 10.4 parts of neopentyl glycol dimethacrylate (trade name: NK Ester NPG, manufactured by Shin Nakamura Kagaku K.K.) were charged into a SUS vessel, and to this was added 0.6 parts of 1,1-bis(t-butylperoxy)3,3,5-trimethylcyclohexane (trade name: Perhexa 3M, manufactured by NOF Corp.) as a curing agent, 0.01 part of 2,6-di-t-butyl-4-methylphenol (trade name: Sumilizer BHT, manufactured by Sumitomo Chemical Co., Ltd.) as a polymerization inhibitor, 0.25 parts of a green pigment as a coloring agent and 0.15 parts of zinc stearate as an internal releasing agent, and then, mixed for 2 minutes by a stirring blade driven by an air motor. This was continuously fed by a gear pump manufactured by Kawasaki Heavy Industries Ltd. to a hopper appended to a kneading extruder (KRC kneader manufactured by Kurimoto Ltd., screw diameter = 50 mm, L/D=13.7) at a speed of 244 g/min.
On the other hand, aluminum hydroxide (trade name: "CWL-325J", manufactured by Sumitomo Chemical Co., Ltd.) as an inorganic filler was charged into a SUS vessel appended to a screw feeder 1 manufactured by Kuma Engineering, and this was continuously fed into a hopper appended to the kneading extruder at a speed of 610 g/min.
Further, the polymer powder (P-1) was charged into a SUS vessel appended to a screw feeder 2 manufactured by Kuma Engineering, and this was continuously fed into a hopper appended to the kneading extruder at a speed of 156 g/min.
A heat medium controlled to 25°C was passed through a jacket of a barrel of the kneading extruder, and according to the above-described method, an acrylic monomer, inorganic filler and polymer powder were quantitatively charged continuously, and kneaded and thickened simultaneously in the kneading extruder and extruded to give an acrylic BMC shaped article in the form of a sheet continuously through a die at the leading end of the kneading extruder at a speed of 60 kg/hr. The time during which the materials stay in the kneading extruder was about 4 minutes. The temperature of the extruded BMC was 50°C, and can be extruded in the form of a sheet without problem. The resulted acrylic BMC shaped article in the form of a sheet required no aging, and even directly after extruded from the die at the leading end of the extruder, the BMC showed no stickiness and handling thereof was excellent.
Then, this acrylic BMC in an amount of 700 g was filled in a mold for flat plate molding of 200 mm square and was cured under heat and pressure for 10 minutes under conditions of a upper mold temperature of 130°C, a lower mold temperature of 115°C and a pressure of 10 MPa, to obtain acrylic artificial marble having a thickness of 10 mm. The resulted artificial marble had a surface of high gloss, and appearance thereof was excellent. This molded article was subjected to a hot water-resistance test to find no whitening and extremely excellent hot water-resistance.

[Example 2]

6.5 parts of methyl methacrylate, 6.5 parts of isobornyl methacrylate and 10.4 parts of neopentyl glycol dimethacrylate were charged into a SUS vessel, and to this was added 0.6 parts of 1,1-bis(t-butylperoxy)3,3,5-trimethylcyclohexane as a curing agent, 0.01 part of 2,6-di-t-butyl-4-methylphenol as a polymerization inhibitor, 0.25 parts of a green pigment as a coloring agent and 0.15 parts of zinc stearate as an internal releasing agent, and then, mixed for 2 minutes by a stirring blade driven by an air motor. This was continuously fed by a gear pump manufactured by Kawasaki Heavy Industries Ltd. to a hopper appended to a kneading extruder (KRC kneader manufactured by Kurimoto Ltd., screw diameter = 50 mm, L/D=13.7) at a speed of 610 g/min.

On the other hand, aluminum hydroxide as an inorganic filler was charged into a SUS vessel appended to a screw feeder 1 manufactured by Kuma Engineering, and this was continuously fed into a hopper appended to the kneading extruder at a speed of 1525 g/min.

Further, the polymer powder (P-2) was charged into a SUS vessel appended to a screw feeder 2 manufactured by Kuma Engineering, and this was continuously fed into a hopper appended to the kneading extruder at a speed of 390 g/min.

A heat medium controlled to 40°C was passed through a jacket of a barrel of the kneading extruder, and according to the above-described method, an acrylic monomer, inorganic filler and polymer powder were quantitatively charged continuously, and kneaded and thickened simultaneously in the kneading extruder and extruded to give an acrylic BMC shaped article in the form of a sheet continuously through a die at the leading end of the kneading extruder at a speed of 150 kg/hr. The time during which the materials stay in the kneading extruder was about 1 minute. The temperature of the extruded BMC was 40°C, and can be extruded in the form of a sheet without problem. The resulted acrylic BMC shaped article in the form of a sheet required no aging, and even directly after extruded from the die at the leading end of the extruder, the BMC showed no stickiness and handling thereof was excellent.

Then, acrylic artificial marble having a thickness of 10 mm was obtained in the same manner as in Example 1 using this acrylic BMC. The hot water-resistance evaluation results of the resulted artificial marble are shown in Table 3.

[Examples 3 to 10]

Acrylic BMCs were obtained in the same manner as in Example 2 except that (P-3) to (P-10) were used as the polymer powder. The thickening property evaluation results of the resulted artificial marbles are shown in Table 3. Then, acrylic artificial marbles having a thickness of 10 mm were obtained in the same manner as in Example 1 using these acrylic BMCs. The hot water-resistance evaluation results of the resulted artificial marbles are shown in Table 3.

[Example 11]

6.5 parts of methyl methacrylate, 6.5 parts of isobornyl methacrylate, 10.4 parts of neopentyl glycol dimethacrylate, 0.6 parts of 1,1-bis(t-butylperoxy)3,3,5-trimethylcyclohexane as a curing agent, 0.01 part of 2,6-di-t-butyl-4-methylphenol as a polymerization inhibitor, 0.25 parts of a green pigment as a coloring agent, 0.15 parts of zinc stearate as an internal releasing agent, 61 parts of aluminum hydroxide as an inorganic filler and 15.6 parts of the polymer powder (P-11) as a thickening agent were charged into a batch-mode kneader (MS double blade kneader, type G30-10, manufactured by Moriyama Seisakusho K.K.). A heat medium controlled to 30°C was passed through the jacket of a kneader and kneading was conducted for 10 minutes to obtain acrylic BMC. The temperature of the resulted acrylic BMC was 40°C, and this BMC showed no stickiness even directly after kneading and handling property thereof was excellent.

Then, acrylic artificial marble having a thickness of 10 mm was obtained in the same manner as in Example 1 using this acrylic BMC. The hot water-resistance evaluation results of the resulted artificial marble are shown in Table 3.

[Example 12]

6.2 parts of methyl methacrylate, 3.9 parts of isobornyl methacrylate and 11.9 parts of neopentyl glycol dimethacrylate were charged into a SUS vessel, and to this was added 0.6 parts of t-amyl peroxy benzoate (trade name: KD-1, manufactured by Kayaku Akuzo K.K.) as a curing agent, 0.01 part of 2,6-di-t-butyl-4-methylphenol as a polymerization inhibitor, and 0.15 parts of zinc stearate as an internal releasing agent, and then, mixed for 2 minutes by a stirring blade driven by an air motor. This was continuously fed by a gear pump manufactured by Kawasaki Heavy Industries Ltd. to a hopper appended to a kneading extruder at a speed of 570 g/min.

On the other hand, aluminum hydroxide as an inorganic filler was charged into a SUS vessel appended to a screw feeder 1 manufactured by Kuma Engineering, and this was continuously fed into a hopper appended to the kneading extruder at a speed of 1150 g/min.

Further, the polymer powder (P-1) was charged into a SUS vessel appended to a screw feeder 2 manufactured by Kuma Engineering, and this was continuously fed into a hopper appended to the kneading extruder at a speed of 300 g/min.

Further, white and black inorganic filler-containing resin particles (D) were charged into a SUS vessel appended to a screw feeder 3 manufactured by Kuma Engineering, and these were continuously fed into a hopper appended to the kneading extruder at a speed of 500 g/min.

A heat medium controlled to 50°C was passed through a jacket of a barrel of the kneading extruder, and according to the above-described method, an acrylic monomer, inorganic filler and polymer powder were quantitatively charged continuously, and kneaded and thickened simultaneously in the kneading extruder and extruded to give an acrylic BMC shaped article in the form of a sheet continuously through a die at the leading end of the kneading extruder at a speed of 150 kg/hr. The time during which the materials stay in the kneading extruder was about 1 minute. The temperature of the extruded BMC was 60°C, and can be extruded in the form of a sheet without problem. The resulted acrylic BMC shaped article in the form of a sheet required no aging, and even directly after extruded from the die at the leading end of the extruder, the BMC showed no stickiness and handling thereof was excellent.

Then, this acrylic BMC in an amount of 700 g was filled in a mold for flat plate molding of 200 mm square and was cured under heat and pressure for 10 minutes under conditions of a upper mold temperature of 130°C, a lower mold temperature of 115°C and a pressure of 10 MPa, to obtain acrylic artificial marble having a thickness of 10 mm. The resulted artificial marble had a surface of high gloss, and appearance thereof was excellent. This molded article was subjected to a hot water-resistance test to find no little whitening and extremely excellent hot water-resistance.

[Examples 13 to 15]

Acrylic BMCs were obtained in the same manner as in Example 10 except that (P-2), (P-4) and (P-9) were used as the polymer powder and the temperature of a heat medium to be passed through the jacket of the barrel of the kneading extruder was changed to 40°C. The thickening property evaluation results of the resulted artificial marbles are shown in Table 3.

Then, acrylic artificial marbles having a thickness of 10 mm were obtained in the same manner as in Example 12 using these acrylic BMCs. The hot water-resistance evaluation results of the resulted artificial marbles are shown in Table 3.

[Example 16]

10 parts of methyl methacrylate, 12 parts of neopentyl glycol dimethacrylate, 0.6 parts of t-amyl peroxy benzoate as a curing agent, 0.01 part of 2,6-di-t-butyl-4-methylphenol as a polymerization inhibitor, 0.15 parts of zinc stearate as an internal releasing agent, 46 parts of aluminum hydroxide as an inorganic filler, 20 parts of white and black inorganic filler-containing resin particles (D) and 12 parts of the polymer powder (P-10) as a thickening agent were charged into a batch-mode kneader. A heat medium controlled to 30°C was passed through a jacket of the kneader and kneading was conducted for 10 minutes to obtain acrylic BMC. The temperature of the resulted acrylic BMC was 40°C, and this BMC showed no stickiness even directly after kneading and handling property thereof was excellent.

Then, acrylic artificial marble having a thickness of 10 mm was obtained in the same manner as in Example 12 using this acrylic BMC. The hot water-resistance evaluation results of the resulted artificial marble are shown in Table 3.

[Comparative Example 1]

6.5 parts of methyl methacrylate, 6.5 parts of isobornyl methacrylate and 10.4 parts of neopentyl glycol dimethacrylate were charged into a SUS vessel, and to this was added 0.6 parts of 1,1-bis(t-butylperoxy)3,3,5-trimethylcyclohexane as a curing agent, 0.01 part of 2,6-di-t-butyl-4-methylphenol as a polymerization inhibitor, 0.25 parts of a green pigment as a coloring agent and 0.15 parts of zinc stearate as an internal releasing agent, and then, mixed for 2 minutes by a stirring blade driven by an air motor. This was continuously fed by a gear pump manufactured by Kawasaki Heavy Industries Ltd. to a hopper appended to a kneading extruder at a speed of 610 g/min.

On the other hand, aluminum hydroxide as an inorganic filler was charged into a SUS vessel appended to a screw feeder 1 manufactured by Kuma Engineering, and this was continuously fed into a hopper appended to the kneading extruder at a speed of 1525 g/min.

Further, the polymer powder (P-12) was charged into a SUS vessel appended to a screw feeder 2 manufactured by Kuma Engineering, and this was continuously fed into a hopper appended to the kneading extruder at a speed of 390 g/min.

A heat medium controlled to 40°C was passed through a jacket of a barrel of the kneading extruder, and according to the above-described method, an acrylic monomer, inorganic filler and polymer powder were quantitatively charged continuously, and kneaded and thickened simultaneously in the kneading extruder and extruded to give an acrylic BMC shaped article in the form of a sheet continuously through a die at the leading end of the kneading extruder at a speed of 150 kg/hr. The time during which the materials stay in the kneading extruder was about 1 minute. The temperature of the extruded BMC was 65°C, and can be extruded in the form of a sheet without problem. The resulted acrylic BMC shaped article in the form of a sheet required no aging, and even directly after extruded from the die at the leading end of the extruder, the BMC showed no stickiness and handling thereof was excellent.

Then, this acrylic BMC in an amount of 700 g was filled in a mold for flat plate molding of 200 mm square and was cured under heat and pressure for 10 minutes under conditions of a upper mold temperature of 130°C, a lower mold temperature of 115°C and a pressure of 10 MPa, to obtain acrylic artificial marble having a thickness of 10 mm. The resulted artificial marble had a surface of high gloss, and appearance thereof was excellent. This molded article was subjected to a hot water-resistance test to find gradual whitening and slightly lowered hot water-resistance in the test of a long period of time.

[Comparative Example 2]

Acrylic BMC was obtained in the same manner as in Example 2 except that (P-13) was used as the polymer powder. Then, acrylic artificial marble having a thickness of 10 mm was obtained in the same manner as in Example 1 using this acrylic BMC. This molded article was subjected to a hot water-resistance test to find gradual whitening and slightly lowered hot water-resistance in the test of a long period of time.

[Comparative Example 3]

12 parts of methyl methacrylate, 7 parts of neopentyl glycol dimethacrylate, 0.6 parts of 1,1-bis(t-butyl peroxy) 3,3,5-trimethylcyclohexane as a curing agent, 0.01 part of 2,6-di-t-butyl-4-methylphenol as a polymerization inhibitor, 0.25 parts of a green pigment as a coloring agent, 0.15 parts of zinc stearate as an internal releasing agent, 61 parts of aluminum hydroxide as an inorganic filler, and 20 parts of the polymer powder (P-14) as a thickening agent were charged into a batch-mode kneader. A heat medium controlled to 30°C was passec through a jacket of the kneader and kneading was conducted for 10 minutes to obtain acrylic BMC. The temperature of the resulted acrylic BMC was 65°C, and this BMC showed no stickiness even directly after kneading and handling property thereof was excellent.

Then, acrylic artificial marble having a thickness of 10 mm was obtained in the same manner as in Example 1 using this acrylic BMC. The deflection temperature under load of this molded article was measured to find it was as relatively low as 98°C. Further, this molded article was subjected to a hot water-resistance test to find gradual whitening and slightly lowered hot water-resistance in the test of a long period of time.

[Comparative Example 4]

10 parts of ethylene glycol dimethacrylate and 10 parts of trimethylolpropane trimethacrylate were charged into a SUS vessel, and to this was added 0.2 parts of dicumyl peroxide (trade name: Percumyl D, manufactured by NOF Corp.) as a curing agent, 0.01 part of 2,6-di-t-butyl-4-methylphenol as a polymerization inhibitor, 0.25 parts of a green pigment as a coloring agent and 0.15 parts of zinc stearate as an internal releasing agent, and then, mixed for 2 minutes by a stirring blade driven by an air motor. This was continuously fed by a gear pump manufactured by Kawasaki Heavy Industries Ltd. to a hopper appended to a kneading extruder at a speed of 505 g/min.

On the other hand, aluminum hydroxide as an inorganic filler was charged into a SUS vessel appended to a screw feeder 1 manufactured by Kuma Engineering, and this was continuously fed into a hopper appended to the kneading extruder at a speed of 1500 g/min.

Further, the polymer powder (P-15) was charged into a SUS vessel appended to a screw feeder 2 manufactured by Kuma Engineering, and this was continuously fed into a hopper appended to the kneading extruder at a speed of 500 g/min.

A heat medium controlled to 40°C was passed through a jacket of a barrel of the kneading extruder, and according to the above-described method, an acrylic monomer, inorganic filler and polymer powder were quantitatively charged continuously, and kneaded and extruded continuously. The time during which the materials stay in the kneading extruder was about 1 minute, and extrusion was conduced at a speed of 150 kg/hr. The temperature of the extruded material was 35°C, and the material was not thickened so much and in the form of semi-liquid, further, the material was sticky and handling thereof was poor, and could not be made into a sheet. Aging at 60°C for 24 hours or more was necessary for thickening this extruded material in the form of semi-liquid to obtain a BMC.

Then, acrylic artificial marble having a thickness of 10 mm was obtained in the same manner as in Example 1 using this aged acrylic BMC. The hot water-resistance evaluation results of the resulted artificial marble are shown in Table 3.

[Comparative Example 5]

7.5 parts of trimethylolpropane trimethacrylate, 7.5 parts of styrene, 0.2 parts of dicumyl peroxide as a curing agent, 0.01 part of 2,6-di-t-butyl-4-methylphenol as a polymerization inhibitor, 0.15 parts of zinc stearate as an internal releasing agent, 42 parts of aluminum hydroxide as an inorganic filler, 20 parts of white and black inorganic filler-containing resin particles and 23 parts of the polymer powder (P-15) as a thickening agent were charged into a batch-mode kneader. A heat medium controlled to 60°C was passed through a jacket of the kneader and kneading was conducted for 30 minutes to obtain acrylic BMC. The temperature of the resulted acrylic BMC was 60°C, and though this BMC was thickened to a certain extent to be a BMC dough-like material directly after completion of the kneading, the material was sticky and handling thereof was poor.

Then, acrylic artificial marble having a thickness of 10 mm was obtained in the same manner as in Example 1 using this acrylic BMC. In the resulted artificial marble, the inorganic filler-containing resin particle which is a grain pattern material was dissolved, granite-like appearance was not obtained and appearance thereof was extremely poor. The evaluation results of this molded article are shown in Table 3.

[Comparative Example 6]

5.7 parts of methyl methacrylate and 4.3 parts of neopentyl glycol dimethacrylate were charged into a SUS vessel, and to this was added 0.4 parts of 1,1-bis(t-butylperoxy)3,3,5-trimethylcyclohexane as a curing agent, 0.01 part of 2,6-di-t-butyl-4-methylphenol as a polymerization inhibitor, 0.25 parts of a green pigment as a coloring agent and 0.15 parts of zinc stearate as an internal releasing agent, and then, mixed for 2 minutes by a stirring blade driven by an air motor. This was continuously fed by a gear pump manufactured by Kawasaki Heavy Industries Ltd. to a hopper appended to a kneading extruder at a speed of 172 g/min.

On the other hand, aluminum hydroxide as an inorganic filler was charged into a SUS vessel appended to a screw feeder 1 manufactured by Kuma Engineering, and this was continuously fed into a hopper appended to the kneading extruder at a speed of 450 g/min.

Further, the polymer powder (P-15) was charged into a SUS vessel appended to a screw feeder 2 manufactured by Kuma Engineering, and this was continuously fed into a hopper appended to the kneading extruder at a speed of 175 g/min.

Further, white and black inorganic filler-containing resin particles were charged into a SUS vessel appended to a screw feeder 3 manufactured by Kuma Engineering, and these were continuously fed into a hopper appended to the kneading extruder at a speed of 85 g/min.

A heat medium controlled to 90°C was passed through a jacket of a barrel of the kneading extruder, and according to the above-described method, an acrylic monomer, inorganic filler and polymer powder were quantitatively charged continuously, and kneading was initiated in the kneading extruder under such conditions that the time during which the materials stay in the kneading extruder was about 2 minutes. However, the acrylic monomer was polymerized and cured in the kneading extruder directly after initiation of the kneading, and an acrylic BMC could not be obtained.

Table 2

| | Acrylic monomer | | Inorganic filler | Polymer powder | | Inorganic filler-containing resin particle | Curing agent | |
| --- | --- | --- | --- | --- | --- | --- | --- | --- |
| | | | | kind | amount | | kind | amount |
| Ex .1 | MMA<br>IBXMA<br>NPGDMA | 6.5<br>6.5<br>10. 4 | 61 | P-1 | 15.6 | - | 3M | 0.6 |
| Ex.2 | MMA<br>IBXMA<br>NPGDMA | 6.5<br>6.5<br>10.4 | 61 | P-2 | 15.6 | - | 3M | 0.6 |
| Ex.3 | MMA<br>IBXMA<br>NPGDMA | 6.5<br>6.5<br>10. 4 | 61 | P-3 | 15.6 | - | 3M | 0.6 |
| | MMA | 6.5 | | | | | | |

Table 2 (continued)

| | Acrylic monomer | | Inorganic filler | Polymer powder | | Inorganic filler-containing resin particle | Curing agent | |
|---|---|---|---|---|---|---|---|---|
| | | | | kind | amount | | kind | amount |
| Ex.4 | IBXMA<br>NPGDMA | 6.5<br>10. 4 | 61 | P-4 | 15.6 | - | 3M | 0.6 |
| Ex.5 | MMA<br>IBXMA<br>NPGDMA | 6.5<br>6.5<br>10. 4 | 61 | P-5 | 15.6 | - | 3M | 0.6 |
| Ex.6 | MMA<br>IBXMA<br>NPGDMA | 6. 5<br>6.5<br>10. 4 | 61 | P-6 | 15.6 | - | 3M | 0.6 |
| Ex.7 | MMA<br>IBXMA<br>NPGDMA | 6. 5<br>6.5<br>10.4 | 61 | P-7 | 15.6 | - | 3M | 0.6 |
| Ex.8 | MMA<br>IBXMA<br>NPGDMA | 6.5<br>6.5<br>10. 4 | 61 | P-8 | 15.6 | - | 3M | 0.6 |
| Ex.9 | MMA<br>IBXMA<br>NPGDMA | 6.5<br>6.5<br>10.4 | 61 | P-9 | 15.6 | - | 3M | 0.6 |
| Ex.10 | MMA<br>IBXMA<br>NPGDMA | 6.5<br>6.5<br>10. 4 | 61 | P-10 | 15.6 | - | 3M | 0.6 |
| Ex.11 | MMA<br>IBXMA<br>NPGDMA | 6.5<br>6.5<br>10. 4 | 61 | P-11 | 15.6 | - | 3M | 0.6 |
| Ex.12 | MMA<br>IBXMA<br>NPGDMA | 6.2<br>3.9<br>11.9 | 46 | P-1 | 12.0 | 20 | KD-1 | 0.6 |
| Ex.13 | MMA<br>IBXMA<br>NPGDMA | 6.2<br>3.9<br>11. 9 | 46 | P-2 | 12.0 | 20 | KD-1 | 0.6 |
| Ex.14 | MMA<br>IBXMA<br>NPGDMA | 6.2<br>3.9<br>11.9 | 46 | P-4 | 12.0 | 20 | KD-1 | 0.6 |
| Ex.15 | MMA<br>IBXMA<br>NPGDMA | 6. 2<br>3.9<br>11.9 | 46 | P-9 | 12.0 | 20 | KD-1 | 0.6 |
| Ex-16 | MMA<br>NPGDMA | 10.0<br>12.0 | 46 | P-10 | 12. 0 | 20 | KD-1 | 0.6 |
| Com. Ex.1 | MMA<br>IBXMA<br>NPGDMA | 6.5<br>6.5<br>10.4 | 61 | P-12 | 15.6 | - | 3M | 0.6 |

Table 2   (continued)

| | Acrylic monomer | | | Inorganic filler | Polymer powder | | Inorganic filler-containing resin particle | Curing agent | |
|---|---|---|---|---|---|---|---|---|---|
| | | | | | kind | amount | | kind | amount |
| Com. Ex.2 | MMA<br>IBXMA<br>NPGDMA | 6.5<br>6.5<br>10.4 | | 61 | P-13 | 15.6 | - | 3M | 0.6 |
| Com. Ex.3 | MMA<br>NPGDMA | 7.0<br>12.0 | | 61 | P-14 | 20.0 | - | 3M | 0.6 |
| Com. Ex.4 | EDMA<br>TMPTMA | 10<br>10 | | 60 | P-15 | 20.0 | - | Percumyl D | 0.2 |
| Corn. Ex.5 | TMPTMA<br>ST | 7.5<br>7.5 | | 42 | P-15 | 23.0 | 20 | Percumyl D | 0.2 |
| Com. Ex.6 | MMA<br>NPGDMA 8.2 | 10.8<br>8.2 | | 51 | P-15 | 20.0 | 10 | 3M | 0.4 |

Abbreviations in Table 2 are shown below.

MMA: methyl methacrylate, IBXMA: isobornyl methacrylate,
NPGDMA: neopentyl glycol dimethacrylate, EDMA: ethylene glycol dimethacrylate, TMPTMA: trimethylolpropane trimethacrylate,
ST: styrene, 3M: 1,1-bis(t-butyl peroxy)3,3,5-trimethylcyclohexane, KD-1: t-amyl peroxy benzoate, Percumyl D: dicumyl peroxide.

Table 3

| | Kneading temperature | Kneading time | Continuous kneading extruding shaping speed | EMC temperature | Thickening property | Clearness of grain pattern | Heat-resistance | Deflection temperature under load | Hot water-resistance | | |
|---|---|---|---|---|---|---|---|---|---|---|---|
| | | | | | | | | | 120 hrs. at 98°C | 300 hrs. at 90°C | 700 hrs. at 90°C |
| Ex.1 | 25°C | 4 min. | 60kg/h | 50°C | ○ | — | ◎ | 128°C | ○ | ○ | ○ |
| Ex.2 | 40°C | 1 min. | 150kg/h | 40°C | ○ | — | ◎ | 122°C | ○ | ○ | ○ |
| Ex.3 | 40°C | 1 min. | 150kg/h | 40°C | ○ | — | ◎ | 115°C | ○ | ○ | ○ |
| Ex.4 | 40°C | 1 min. | 150kg/h | 40°C | ○ | — | ○ | 107°C | ○ | ○ | ○ |
| Ex.5 | 40°C | 1 min. | 150kg/h | 40°C | ○ | — | ◎ | 120°C | ○ | ○ | ○ |
| Ex.6 | 40°C | 1 min. | 150kg/h | 40°C | ○ | — | ◎ | 123°C | ○ | ○ | ○ |
| Ex.7 | 40°C | 1 min. | 150kg/h | 40°C | ○ | — | ◎ | 120°C | ○ | ○ | ○ |
| Ex.8 | 40°C | 1 min. | 150kg/h | 40°C | ○ | — | ◎ | 122°C | ○ | ○ | ○ |
| Ex.9 | 40°C | 1 min. | 150kg/h | 40°C | ○ | — | ◎ | 121°C | ○ | ○ | ○ |
| Ex.10 | 40°C | 1 min. | 150kg/h | 40°C | ○ | — | ◎ | 120°C | ○ | ○ | ○ |
| Ex.11 | 30°C | 10 min. | — | 40°C | ○ | — | ◎ | 119°C | ○ | ○ | ○ |
| Ex.12 | 50°C | 1 min. | 150kg/h | 60°C | ○ | ○ | ◎ | 129°C | ○ | ○ | ○ |
| Ex.13 | 40°C | 1 min. | 150kg/h | 40°C | ○ | ○ | ◎ | 122°C | ○ | ○ | ○ |
| Ex.14 | 40°C | 1 min. | 150kg/h | 40°C | ○ | ○ | ○ | 108°C | ○ | ○ | ○ |
| Ex.15 | 40°C | 1 min. | 150kg/h | 40°C | ○ | ○ | ◎ | 121°C | ○ | ○ | ○ |
| Ex.16 | 40°C | 10 min. | — | 40°C | ○ | ○ | ◎ | 116°C | ○ | ○ | ○ |
| Com.Ex.1 | 40°C | 1 min. | 150kg/h | 65°C | ○ | — | ◎ | 129°C | ○ | △ | × |
| Com.Ex.2 | 40°C | 1 min. | 150kg/h | 60°C | ○ | — | ◎ | 128°C | ○ | △ | × |
| Com.Ex.3 | 30°C | 10 min. | — | 65°C | ○ | — | △ | 93°C | ○ | △ | × |
| Com.Ex.4 | 40°C | 1 min. | 150kg/h | 35°C | × | — | ◎ | 126°C | ○ | ○ | ○ |
| Com.Ex.5 | 60°C | 30 min. | — | 60°C | △ | × | ○ | 112°C | ○ | ○ | ○ |
| Com.Ex.6 | 90°C | 2 min. | 53kg/h | — | — | — | — | — | — | — | — |

In each example, since a polymer powder having a remaining emulsifier amount of from 0.01 to 0.95 wt% is used, thickening speed is high, an acrylic BMC requiring no aging is obtained, and artificial marble obtained by molding the acrylic BMC has extremely excellent hot water-resistance. Since this acrylic BMC is thickened in a short period of time, kneading, thickening and extrusion can be conducted in one step, providing extremely excellent productivity, therefore, this BMC is industrially very useful.

**Claims**

1. An acrylic SMC or BMC comprising an acrylic monomer or acrylic syrup (A), an inorganic filler (B) and a polymer powder (C) containing a remaining emulsifier in an amount from 0.01 to 0.95 wt% as constituent components.

2. The acrylic SMC or BMC according to Claim 1 further comprising an inorganic filler-containing resin particle (D) as a constituent component.

3. The acrylic SMC or BMC according to Claim 1 or 2 wherein the polymer powder (C) is a polymer powder obtained by making an emulsion produced by emulsion polymerization into a powder.

4. The acrylic SMC or BMC according to Claim 1 or 2. wherein the degree of swelling of the polymer powder (C) in methyl methacrylate is 1-fold or less or 20-fold or more.

5. The acrylic SMC or BMC according to Claim 1 or 2 wherein the weight-average molecular weight of the polymer powder (C) is 100000 or more.

6. The acrylic SMC or BMC according to Claim 3 wherein the polymer powder (C) is a polymer powder obtained from an emulsion having a core/shell structure produced by emulsion polymerization.

7. The acrylic SMC or BMC according to Claim 6 wherein the glass transition temperature of a shell layer of a polymer powder obtained from an emulsion having a core/shell structure is 90°C or less.

8. The acrylic SMC or BMC according to Claim 7 wherein the average value of the glass transition temperature of a core layer and the glass transition temperature of a shell layer of a polymer powder obtained from an emulsion having a core/shell structure is 65°C or more.

9. The acrylic SMC or BMC according to Claim 8 wherein the glass transition temperature of a core layer of a polymer powder obtained from an emulsion having a core/shell structure is higher than the glass transition temperature of a shell layer.

10. The acrylic SMC or BMC according to Claim 6 wherein a shell layer of a polymer powder obtained from an emulsion having a core/shell structure is non-cross-linked.

11. The acrylic SMC or BMC according to Claim 6 wherein a core layer of a polymer powder obtained from an emulsion having a core/shell structure is non-cross-linked.

12. The acrylic SMC or BMC according to Claim 3 wherein the powder forming method to provide the polymer powder is a coagulation method.

13. A method for producing an acrylic SMC or BMC comprising the step of kneading an acrylic monomer or acrylic syrup (A), an inorganic filler (B) and a polymer powder (C) containing a remaining emulsifier in an amount from 0.01 to 0.95 wt% at a kneading temperature from 20 to 70°C for thickening thereof in a kneading time of 20 minutes or less.

14. The method for producing an acrylic SMC or BMC according to Claim 13 wherein the components (A) to (C) and further an inorganic filler-containing resin particle (D) are used and kneaded at a kneading temperature from 20 to 70°C for thickening thereof in a kneading time of 20 minutes or less.

15. The method for producing an acrylic SMC or BMC according to Claim 13 or 14 wherein the polymer powder (C) is a polymer powder obtained from an emulsion having a core/shell structure produced by emulsion polymerization.

16. A method for producing an acrylic SMC or BMC in which an acrylic monomer or acrylic syrup (A), an inorganic filler (B) and a polymer powder (C) containing a remaining emulsifier in an amount from 0.01 to 0.95 wt% are kneaded, thickened and extruded at a kneading temperature from 20 to 70°C in a time of 20 minutes or less in one step to shape the mixture into a desired form continuously.

17. The method for producing an acrylic SMC or BMC in which the components (A) to (C) and further an inorganic filler-containing resin particle (D) are used and kneaded, thickened and extruded at a kneading temperature from 20 to 70 °C in a time of 20 minutes or less in one step to shape the mixture into a desired form continuously.

18. The method for producing an acrylic SMC or BMC according to Claim 16 or 17 wherein the polymer powder (C) is a polymer powder obtained from an emulsion having a core/shell structure produced by emulsion polymerization.

19. A method for producing acrylic artificial marble comprising curing under heat and pressure the acrylic SMC or BMC of Claim 1 or 2.

20. A method for producing acrylic artificial marble comprising curing under heat and pressure the acrylic SMC or BMC obtained by production method of Claim 13, 14, 16 or 17.

21. A thickening agent composed of a polymer powder containing a remaining emulsifier in an amount from 0.01 to 0.95 wt%.

22. The thickening agent according to Claim 21 wherein the polymer powder has a core/shell structure in which the glass transition temperature of the shell layer is 90°C or less, the average value of the glass transition temperature of the core layer and the glass transition temperature of the shell layer is 65°C or more, the glass transition temperature of the core layer is higher than the glass transition temperature of the shell layer, the shell layer is non-cross-linked and the core layer is non-cross-linked.

23. The thickening agent according to Claim 21 or 22 wherein the powder forming method to provide the polymer powder is a coagulation method.

FIG. 1

FIG. 2

## INTERNATIONAL SEARCH REPORT

| International application No. |
|---|
| PCT/JP99/07168 |

**A. CLASSIFICATION OF SUBJECT MATTER**
Int.Cl$^7$ C04B26/06 , C04B111:54

According to International Patent Classification (IPC) or to both national classification and IPC

**B. FIELDS SEARCHED**

Minimum documentation searched (classification system followed by classification symbols)
Int.Cl$^7$ C04B26/06 , C04B111:54

Documentation searched other than minimum documentation to the extent that such documents are included in the fields searched
Jitsuyo Shinan Koho          1926-1996     Toroku Jitsuyo Shinan Koho   1994-2000
Kokai Jitsuyo Shinan Koho   1971-2000     Jitsuyo Shinan Toroku Koho   1996-2000

Electronic data base consulted during the international search (name of data base and, where practicable, search terms used)
DIALOG(WPI/L)
ACRYL?*[SHEET+BULK]*MOULDING*EMULSIF?

**C. DOCUMENTS CONSIDERED TO BE RELEVANT**

| Category* | Citation of document, with indication, where appropriate, of the relevant passages | Relevant to claim No. |
|---|---|---|
| A | JP, 10-310458, A (Mitsubishi Rayon Co., Ltd.), 24 November, 1998 (24.11.98)   (Family: none) | 1-23 |
| A | WO, 9846679, A (MITSUBISHI RAYON CO LTD), 22 October, 1998 (22.10.98) & JP, 10-287716, A | 1-23 |

☐ Further documents are listed in the continuation of Box C.          ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 March, 2000 (06.03.00) | 14 March, 2000 (14.03.00) |

| Name and mailing address of the ISA/ Japanese Patent Office | Authorized officer |
|---|---|
| Facsimile No. | Telephone No. |

Form PCT/ISA/210 (second sheet) (July 1992)